(19) Europäisches Patentamt
European Patent Office
Office européen des brevets

(11) EP 3 988 582 A1

(12) EUROPEAN PATENT APPLICATION
published in accordance with Art. 153(4) EPC

(43) Date of publication:
**27.04.2022 Bulletin 2022/17**

(21) Application number: **20831370.0**

(22) Date of filing: **24.06.2020**

(51) International Patent Classification (IPC):
***C08F 8/42*** (2006.01) ***C08F 4/70*** (2006.01)
***C08F 210/02*** (2006.01) ***C08L 23/26*** (2006.01)

(52) Cooperative Patent Classification (CPC):
**C08F 4/70; C08F 4/80; C08F 8/42; C08F 210/00; C08F 210/02; C08F 220/04; C08F 222/02; C08F 222/04; C08F 232/00; C08L 23/26**

(86) International application number:
**PCT/JP2020/024883**

(87) International publication number:
**WO 2020/262481 (30.12.2020 Gazette 2020/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2019 JP 2019116759**

(71) Applicant: **Japan Polyethylene Corporation**
**Tokyo 100-8251 (JP)**

(72) Inventors:
- **YOSHIMOTO Keiichi**
  **Kawasaki-shi, Kanagawa 210-8548 (JP)**
- **UEMATSU Masahiro**
  **Kawasaki-shi, Kanagawa 210-8548 (JP)**
- **YASUDA Kaoru**
  **Kawasaki-shi, Kanagawa 210-8548 (JP)**

(74) Representative: **Müller-Boré & Partner**
**Patentanwälte PartG mbB**
**Friedenheimer Brücke 21**
**80639 München (DE)**

# (54) RESIN COMPOSITION FOR INJECTION MOLDING OR COMPRESSION MOLDING

(57) This is to provide a resin composition for injection molding or compression molding using an ethylene-based ionomer excellent in impact strength, heat resistance, long-term durability, etc.

This is a resin composition for injection molding or compression molding which comprises an ionomer in which, in a copolymer (P) containing a structural unit (A) derived from ethylene and/or an $\alpha$-olefin having 3 to 20 carbon atoms, and a structural unit (B) derived from a monomer having a carboxyl group(s) and/or a dicarboxylic anhydride group(s) as essential constitutional units, at least a part of the carboxyl groups and/or the dicarboxylic anhydride groups in the copolymer (P) being converted into a metal-containing carboxylic acid salt(s) containing at least one kind of a metal ion(s) selected from Group 1, Group 2 or Group 12 of the periodic table, and has a phase angle $\delta$ at an absolute value G*=0.1 MPa of a complex modulus of elasticity measured by a rotary rheometer of 50 degrees to 75 degrees.

EP 3 988 582 A1

## Description

### TECHNICAL FIELD

The present invention relates to a resin composition for injection molding or compression molding using a novel ionomer.

### BACKGROUND ART

As the molding method of resins, there are injection molding and compression molding. In the injection molding, a molding material is heated and melted to make it in a plasticized state, then, injected and filled into a pre-closed mold cavity and cooled (thermoplastic resin) or heated (thermosetting resin) to solidify the same to obtain a molded product. A molded product having good dimensional accuracy can be stably obtained with good productivity. In the compression molding, a molding material is charged into a mold comprising an upper mold and a lower mold in an open state, the mold is closed while being heated and melted, then, shaped and after curing, the mold is opened and a molded product is taken out. The molding machine and mold structure are relatively simple and inexpensive, and a large-sized molded product can be obtained relative to the mold clamping force.

An ethylene-based ionomer is a resin using an ethylene-unsaturated carboxylic acid copolymer as a base resin, and intermolecularly bonded with metal ions such as sodium, zinc, and the like (Patent document 1). It has characteristics of having tough, high elasticity and flexibility, and wear resistance, and transparency, etc.

At present, as a commercially available ethylene-based ionomer, it has been known "Surlyn (Registered Trademark)" which is a sodium salt or zinc salt of an ethylene-methacrylic acid copolymer developed by Dupont, and "Himilan (Registered Trademark)" sold by Dow-Mitsui Polychemicals Co., Ltd., and the like.

However, in the ethylene-unsaturated carboxylic acid copolymers which are a base resin used for the ethylene-based ionomers currently commercially sold, a polar group-containing olefin copolymer in which ethylene and a polar group-containing monomer such as an unsaturated carboxylic acid, etc., are polymerized by the high-pressure radical polymerization method is used in each case. The high-pressure radical polymerization method has a merit that polymerization is possible at a low cost and relatively without selecting the kind of the polar group-containing monomer. However, the molecular structure of this polar group-containing olefin copolymer produced by the high-pressure radical polymerization method has a structure in which it has many long-chain branches and short-chain branches irregularly as shown in the image diagram shown in Fig. 1, and it has a drawback that it is insufficient in strength.

On the other hand, it has conventionally been sought a method for producing a polar group-containing olefin copolymer in which the molecular structure is a linear state using a polymerization method which uses a catalyst, as shown in the image diagram shown in Fig. 2, but the polar group-containing monomer generally becomes catalytic poisons so that its polymerization is difficult, and in fact, it has been deemed to be difficult for long years to obtain a polar group-containing olefin copolymer having desired physical properties by an industrially inexpensive and stable method.

However, in recent years, a method for obtaining a polar group-containing olefin copolymer having a substantially linear state molecular structure industrially low cost and stably has been proposed using a novel catalyst and a novel producing method developed by the applicant of the present application, etc.

And, it has been proposed by the applicant of the present application, etc., that, as a producing method of a polar group-containing olefin copolymer which becomes a base resin of the ethylene-based ionomer, it has been reported to succeed in producing a binary ionomer by producing a copolymer of ethylene and t-butyl acrylate using a late-period transition metal catalyst, and after modifying the obtained polar group-containing olefin copolymer to an ethylene-acrylic acid copolymer by subjecting to a heat or acid treatment, reacting with a metal ion (Patent document 2).

### PRIOR ART DOCUMENTS

### PATENT DOCUMENTS

Patent document 1: U.S. Patent No. 3,264,272
Patent document 2: JP 2016-79408A

SUMMARY OF THE INVENTION

PROBLEMS TO BE SOLVED BY THE INVENTION

In the field of injection molding and the field of compression molding, the impact strength, heat resistance, long-term durability, etc. of molded products are important characteristics, and with regard to injection molded products and compression molded products using ethylene-based resin, improvement of the characteristics thereof has been also expected. The ionomer, which has been known in Patent Document 1, etc, has insufficient physical properties in terms of strength and melting point as a material for injection molding and compression molding. In general, strength and heat resistance are in a trade-off relationship, and it is expected that impact strength and heat resistance will be improved in a well-balanced manner.

An object of the present application is to provide a resin composition for injection molding or compression molding using an ethylene-based ionomer having excellent impact strength, heat resistance, long-term durability, etc. in view of the situation of the prior art.

MEANS TO SOLVE THE PROBLEMS

The ethylene-based ionomers described in Patent document 2 are novel ethylene-based ionomers which are never seen before in which the base resin has a substantially linear molecular structure and also functions as an ionomer, and its physical properties, etc., are markedly different from the conventional ethylene-based ionomers, and their unique characteristics and suitable applications were unknown. The present inventors have carried out intensive studies to solve such problems, and as a result, they have found that a resin composition containing an ionomer which contains specific structural units and shows a specific relationship between the complex modulus of elasticity and the phase angle, and has a specific MFR is excellent in impact strength, heat resistance, long-term durability, etc., and can be suitably used for injection molding and compression molding, whereby they have completed the present invention.

That is, according to the first invention of the present invention, it is provided a resin composition for injection molding or compression molding characterized in that the composition comprises the following ionomer.

An ionomer characterized in that at least a part of a carboxyl group and/or a dicarboxylic anhydride group in a copolymer (P) containing a structural unit (A) derived from ethylene and/or an $\alpha$-olefin having 3 to 20 carbon atoms and a structural unit (B) derived from a monomer having a carboxyl group and/or a dicarboxylic anhydride group as essential constitutional units being converted into a metal-containing carboxylic acid salt containing at least one kind of a metal ion(s) selected from Group 1, Group 2 or Group 12 of the periodic table, and a phase angle $\delta$ of the ionomer at an absolute value G*=0.1 MPa of a complex modulus of elasticity measured by a rotary rheometer is a range of 50 degrees to 75 degrees.

Also, it is provided the resin composition for injection molding or compression molding according to the second invention of the present invention, in the first invention, characterized in that MFR measured under conditions of a temperature of 190°C and a load of 21.18N in accordance with JIS K-7210 (1999) of the resin composition is 0.5 g/10 min or more.

Also, it is provided the resin composition for injection molding or compression molding according to the third invention of the present invention, in the first or second invention, characterized in that a number of methyl branches calculated by $^{13}$C-NMR of the copolymer (P) is 50 or less per 1,000 carbons.

Also, it is provided the resin composition for injection molding or compression molding according to the fourth invention of the present invention, in the first or second invention, characterized in that a number of methyl branches calculated by $^{13}$C-NMR of the copolymer (P) is 5 or less per 1,000 carbons.

Also, it is provided the resin composition for injection molding or compression molding according to the fifth invention of the present invention, in any of the first to fourth inventions, characterized in that the copolymer (P) contains 2 to 20 mol% of the structural unit (B) in the copolymer.

Also, it is provided the resin composition for injection molding or compression molding according to the sixth invention of the present invention, in any of the first to fifth inventions, characterized in that the structural unit (A) is a structural unit derived from ethylene.

Also, it is provided the resin composition for injection molding or compression molding according to the seventh invention of the present invention, in any of the first to sixth inventions, characterized in that the copolymer (P) is produced by using a transition metal catalyst containing a transition metal of Groups 8 to 11 of the periodic table.

Also, it is provided the resin composition for injection molding or compression molding according to the eighth invention of the present invention, in the seventh invention, characterized in that the transition metal catalyst is a transition metal catalyst comprising phosphorus sulfonic acid or phosphorus phenol ligand and nickel or palladium.

Also, it is provided the resin composition for injection molding or compression molding according to the ninth invention of the present invention, in any of the first to eighth inventions, characterized in that a relation of a melting

point Tm (°C) and a tensile impact strength T (kJ/m$^2$) of the ionomer satisfies the following formula (a).

$$Tm > -0.0177 \times T + 103.1 \cdots\cdots \text{Formula } (\alpha)$$

Further, it is provided the resin composition for injection molding or compression molding according to the tenth invention of the present invention, characterized in that the composition comprises the following ionomer.
an ionomer characterized in that the ionomer comprises a copolymer (P) containing a structural unit (A) derived from ethylene and/or an $\alpha$-olefin having 3 to 20 carbon atoms, a structural unit (B) derived from a monomer having a carboxyl group and/or a dicarboxylic anhydride group, and other than the structural unit (A) and the structural unit (B), a structural unit (C) which is a compound having one or more carbon-carbon double bond in a molecular structure as essential constitutional units, and at least a part of a carboxyl group and/or a dicarboxylic anhydride group being converted into a metal-containing carboxylic acid salt containing at least one kind of a metal ion(s) selected from Group 1, Group 2 or Group 12 of the periodic table, and a phase angle $\delta$ of the ionomer at an absolute value G*=0.1 MPa of a complex modulus of elasticity measured by a rotary rheometer is a range of 50 degrees to 75 degrees.
Also, it is provided the resin composition for injection molding or compression molding according to the eleventh invention of the present invention, in the tenth invention, characterized in that the structural unit (C) in the copolymer (P) is a non-cyclic monomer represented by the following general formula (1) or a cyclic monomer represented by the following general formula (2).

[Formula 1]

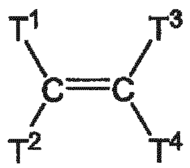
・・・(1)

[in the general formula (1), $T^1$ to $T^3$ each independently represents a substituent selected from the group consisting of a hydrogen atom, a hydrocarbon group having 1 to 20 carbon atoms, a hydrocarbon group having 1 to 20 carbon atoms substituted by a hydroxyl group(s), a hydrocarbon group having 2 to 20 carbon atoms substituted by an alkoxy group(s) having 1 to 20 carbon atoms, a hydrocarbon group having 3 to 20 carbon atoms substituted by an ester group(s) having 2 to 20 carbon atoms, a hydrocarbon group having 1 to 20 carbon atoms substituted by a halogen atom(s), an alkoxy group having 1 to 20 carbon atoms, an aryl group having 6 to 20 carbon atoms, an ester group having 2 to 20 carbon atoms, a silyl group having 3 to 20 carbon atoms, a halogen atom or a cyano group, and
$T^4$ represents a substituent selected from the group consisting of a hydrocarbon group having 1 to 20 carbon atoms substituted by a hydroxyl group(s), a hydrocarbon group having 2 to 20 carbon atoms substituted by an alkoxy group(s) having 1 to 20 carbon atoms, a hydrocarbon group having 3 to 20 carbon atoms substituted by an ester group(s) having 2 to 20 carbon atoms, a hydrocarbon group having 1 to 20 carbon atoms substituted by a halogen atom(s), an alkoxy group having 1 to 20 carbon atoms, an aryl group having 6 to 20 carbon atoms, an ester group having 2 to 20 carbon atoms, a silyl group having 3 to 20 carbon atoms, a halogen atom or a cyano group.]

[Formula 2]

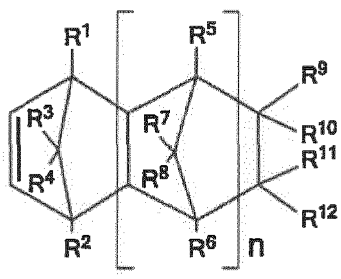
・・・(2)

[in the general formula (2), $R^1$ to $R^{12}$ each may be the same or different from each other, and each is selected from the group consisting of a hydrogen atom, a halogen atom and a hydrocarbon group having 1 to 20 carbon atoms, $R^9$ and

$R^{10}$, and, $R^{11}$ and $R^{12}$ may be each integrated to form a divalent organic group, and $R^9$ or $R^{10}$, and $R^{11}$ or $R^{12}$ may form a ring with each other.

Also, n indicates 0 or a positive integer, and when n is 2 or more, $R^5$ to $R^8$ may be the same or different from each other in each repeating unit.]

Also, it is provided the resin composition for injection molding or compression molding according to the twelfth invention of the present invention, in the eleventh invention, characterized in that the structural unit (C) in the copolymer (P) is the non-cyclic monomer represented by the general formula (1).

Also, it is provided the resin composition for injection molding or compression molding according to the thirteenth invention of the present invention, in the eleventh invention, characterized in that the structural unit (C) in the copolymer (P) is the cyclic monomer represented by the general formula (2).

Also, according to it is provided the resin composition for injection molding or compression molding the fourteenth invention of the present invention, in any of the tenth to thirteenth inventions, characterized in that MFR measured under conditions of a temperature of 190°C and a load of 21.18N in accordance with JIS K-7210 (1999) of the resin composition is 0.5 g/10 min or more the resin composition.

Also, it is provided the resin composition for injection molding or compression molding according to the fifteenth invention of the present invention, in any of the tenth to fourteenth inventions, characterized in that a number of methyl branches calculated by $^{13}$C-NMR of the copolymer (P) is 50 or less per 1,000 carbons.

Also, according to the sixteenth invention of the present invention, in any of the tenth to fourteenth inventions, characterized in that a number of methyl branches calculated by $^{13}$C-NMR of the copolymer (P) is 5 or less per 1,000 carbons.

Also, according to the seventeenth invention of the present invention, in any of the tenth to sixteenth inventions, wherein the copolymer (P) contains 2 to 20 mol% of the structural unit (B) in the copolymer.

Also, according to the eighteenth invention of the present invention, in any of the tenth to seventeenth inventions, characterized in that the structural unit (A) is a structural unit derived from ethylene.

Also, according to the nineteenth invention of the present invention, in any of the tenth to eighteenth inventions, characterized in that the copolymer (P) is produced by using a transition metal catalyst containing a transition metal of Groups 8 to 11 of the periodic table.

Also, according to the twelfth invention of the present invention, in the nineteenth invention, characterized in that the transition metal catalyst is a transition metal catalyst comprising phosphorus sulfonic acid or phosphorus phenol ligand and nickel or palladium.

Also, according to the twenty-first invention of the present invention, in any of the tenth to twentieth inventions, characterized in that a relation of a melting point Tm (°C) and a tensile impact strength T (kJ/m$^2$) of the ionomer satisfies the following formula (a).

$$Tm > -0.0177 \times T + 103.1 \cdots\cdots\cdots \text{formula } (\alpha)$$

Also, according to the twenty-second invention of the present invention, in any of the first to twenty-first inventions, characterized in that the melting point Tm (°C) of the ionomer is 90°C or higher.

Also, according to the twenty-third invention of the present invention, in any of the first to twenty-second inventions, characterized in that haze H (%) measured in accordance with JIS K 7136-2000 is less than 19%.

## EFFECTS OF THE INVENTION

The resin composition for injection molding or compression molding using the ionomer of the present invention, which has a substantially linear structure, is excellent in impact strength, heat resistance, long-term durability, etc., as compared with the molding material of the resin composition using conventional ethylene-based ionomers.

## BRIEF DESCRIPTION OF THE DRAWINGS

Fig. 1 is an image diagram of a multi-branched molecular structure of a polar group-containing olefin copolymer produced by the high-pressure radical polymerization method. Circles in the figure represent polar groups.

Fig. 2 is an image diagram of a polar group-containing olefin copolymer in which the molecular structure is linear. Circles in the figure represent polar groups.

Fig. 3 is a drawing showing the relation between the melting point Tm (°C) and the tensile impact strength T (kJ/m$^2$) of Examples and Comparative Examples.

EMBODIMENTS TO CARRY OUT THE INVENTION

The present invention is a resin composition for injection molding or compression molding using an ionomer characterized in that the ionomer comprises a structural unit (A) derived from ethylene and/or an α-olefin having 3 to 20 carbon atoms and a structural unit (B) derived from a monomer having a carboxyl group(s) and/or a dicarboxylic anhydride group(s) as essential constitutional units, and further containing, if necessary, a structural unit (C) which is a compound having one or more carbon-carbon double bond in a molecular structure as a constitutional unit, in which they are substantially copolymerized linearly, preferably random copolymerized as a base resin, and at least a part of the carboxyl group and/or the dicarboxylic anhydride group of the structural unit (B) is/are converted into a metal-containing carboxylic acid salt(s) containing at least one kind of a metal ion(s) selected from Group 1, Group 2 or Group 12 of the periodic table.

Hereinafter, the ionomer, the resin composition for injection molding or compression molding using the ionomer and the uses thereof, etc., according to the present invention will be explained in detail for each item. Incidentally, in the present specification, "(meth) acrylic acid" means acrylic acid or methacrylic acid. Also, in the present specification, "to" indicating a numerical range is used to mean that the numerical values described before and after the numerical range are included as the lower limit value and the upper limit value. Further, in the present specification, the copolymer means a copolymer of binary or more containing at least one kind of a unit (A) and at least one kind of a unit (B).

Also, in the present specification, the ionomer means an ionomer of binary or more of the copolymer, which contains the above-mentioned structural unit (A) and a structural unit (B') in which at least a part of the above-mentioned structural unit (B) is converted into a metal-containing carboxylic acid salt(s), and which may further contain the above-mentioned structural unit (B).

1. Ionomer

The ionomer of the present invention is characterized in that the ionomer comprises a copolymer (P) as a base resin which contains a structural unit (A) derived from ethylene and/or an α-olefin having 3 to 20 carbon atoms and a structural unit (B) derived from a monomer having a carboxyl group(s) and/or a dicarboxylic anhydride group(s) as essential constitutional units, and further, if necessary, contains a structural unit (C) which is a compound having one or more carbon-carbon double bonds in the molecular structure, and they are substantially copolymerized linearly, preferably random copolymerized, and at least a part of the carboxyl group and/or the dicarboxylic anhydride group of the structural unit (B) is/are converted into a metal-containing carboxylic acid salt(s) containing at least one kind of a metal ion(s) selected from Group 1, Group 2 or Group 12 of the periodic table.

(1) Structural unit (A)

The structural unit (A) is at least one kind of a structural unit(s) selected from the group consisting of a structural unit derived from ethylene and a structural unit derived from an α-olefin having 3 to 20 carbon atoms.

The α-olefin according to the present invention is an α-olefin having 3 to 20 carbon atoms represented by the structural formula: $CH_2=CHR^{18}$ ($R^{18}$ is a hydrocarbon group having 1 to 18 carbon atoms, which may be a linear structure or may have a branch). The number of the carbon atoms of the α-olefin is more preferably 3 to 12.

Specific examples of the structural unit (A) may be mentioned ethylene, propylene, 1-butene, 1-pentene, 1-hexene, 1-octene, 1-decene, 3-methyl-1-butene, and 4-methyl-1-pentene, etc., and it may be ethylene. As the ethylene, in addition to that derived from a petroleum raw material, ethylene derived from a non- petroleum raw material such as that derived from a plant raw material can be used.

Also, the structural unit (A) may be one kind, or may be a plural kind.

As a combination of two kinds, there may be mentioned, for example, ethylene-propylene, ethylene-1-butene, ethylene-1-hexene, ethylene-1-octene, propylene-1-butene, propylene-1-hexene, and propylene-1-octene, etc.

As a combination of three kinds, there may be mentioned, for example, ethylene-propylene-1-butene, ethylene-propylene-1-hexene, ethylene-propylene-1-octene, propylene-1-butene-hexene, and propylene-1-butene-1-octene, etc.

In the present invention, as the structural unit (A), it preferably contains ethylene as indispensable, and if necessary, one or more kinds of an α-olefin(s) having 3 to 20 carbon atoms may be further contained.

The ethylene in the structural unit (A) may be 65 to 100 mol% based on the total mol of the structural unit (A), and may be 70 to 100 mol%.

From the viewpoint of heat resistance, the above-mentioned structural unit (A) may be a structural unit derived from ethylene.

(2) Structural unit (B)

The structural unit (B) is a structural unit derived from a monomer having a carboxyl group(s) and/or a dicarboxylic

anhydride group(s).

As the monomer having a carboxyl group, there may be specifically mentioned an unsaturated carboxylic acid such as acrylic acid, methacrylic acid, maleic acid, fumaric acid, tetrahydrophthalic acid, itaconic acid, citraconic acid, crotonic acid, isocrotonic acid, norbomenedicarboxylic acid, bicyclo[2,2,1]hept-2-ene-5,6-dicarboxylic acid, etc., and as the monomer having a dicarboxylic anhydride group, there may be mentioned an unsaturated dicarboxylic anhydride such as maleic anhydride, itaconic anhydride, citraconic anhydride, tetrahydrophthalic anhydride, 5-norbornene-2,3-dicarboxylic anhydride, 3,6-epoxy-1,2,3,6-tetrahydrophthalic anhydride, tetracyclo[6.2.1.$1^{3,6}$.$0^{2,7}$]dodeca-9-ene-4,5-dicarboxylic anhydride, 2,7-octadien-1-ylsuccinic anhydride, etc. Specific compounds may be mentioned acrylic acid, methacrylic acid and 5-norbornene-2,3-dicarboxylic anhydride, and particularly it may be acrylic acid.

Also, the monomer having a carboxyl group and/or a dicarboxylic anhydride group may be one kind, or may be a plural kind.

Incidentally, the dicarboxylic anhydride group may react with moisture in the air to open a ring and partially become a dicarboxylic acid, and as long as in the range that the gist of the present invention is not deviated, the dicarboxylic anhydride group may be ring-opened.

(3) Other structural unit (C)

As the copolymer (P) to be used in the present invention, both of a binary copolymer which consists only of the structural unit (A) and the structural unit (B), and a multinary copolymer comprising the structural unit (A), the structural unit (B) and further a structural unit (C) other than these can be preferably used. The monomer which provides the structural unit (C) can be used an optional monomer as long as it is not included in the monomers which provides the structural unit (A) and the structural unit (B). The monomer which provides the structural unit (C) is not limited as long as it is a compound having one or more carbon-carbon double bonds in the molecular structure, and may be mentioned, for example, a non-cyclic monomer represented by the general formula (1) mentioned later and a cyclic monomer represented by the general formula (2), etc.

When ternary or more of a multinary copolymer containing the structural unit (C) component is used as a base resin of the ionomer, a cured product having excellent transparency, gloss, impact strength, etc., tends to be obtained. On the other hand, by using the binary copolymer of the structural units (A) and (B), thermal characteristics such as the melting point tend to be more excellent. Introduction of the structural unit (C) can be appropriately selected according to the molding method and the characteristics required for the molded product. The structural unit (C) may be based on one kind of monomer, or may be used in combination of two or more kinds of monomers.

Non-cyclic monomer

[Formula 3]

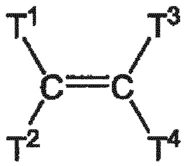

$\cdots$ (1)

[in the general formula (1), $T^1$ to $T^3$ each independently represents a substituent selected from the group consisting of a hydrogen atom, a hydrocarbon group having 1 to 20 carbon atoms, a hydrocarbon group having 1 to 20 carbon atoms substituted by a hydroxyl group(s), a hydrocarbon group having 2 to 20 carbon atoms substituted by an alkoxy group(s) having 1 to 20 carbon atoms, a hydrocarbon group having 3 to 20 carbon atoms substituted by an ester group(s) having 2 to 20 carbon atoms, a hydrocarbon group having 1 to 20 carbon atoms substituted by a halogen atom(s), an alkoxy group having 1 to 20 carbon atoms, an aryl group having 6 to 20 carbon atoms, an ester group having 2 to 20 carbon atoms, a silyl group having 3 to 20 carbon atoms, a halogen atom or a cyano group, and

$T^4$ represents a substituent selected from the group consisting of a hydrocarbon group having 1 to 20 carbon atoms substituted by a hydroxyl group(s), a hydrocarbon group having 2 to 20 carbon atoms substituted by an alkoxy group(s) having 1 to 20 carbon atoms, a hydrocarbon group having 3 to 20 carbon atoms substituted by an ester group(s) having 2 to 20 carbon atoms, a hydrocarbon group having 1 to 20 carbon atoms substituted by a halogen atom(s), an alkoxy group having 1 to 20 carbon atoms, an aryl group having 6 to 20 carbon atoms, an ester group having 2 to 20 carbon atoms, a silyl group having 3 to 20 carbon atoms, a halogen atom or a cyano group.]

In the ionomer of the present invention, $T^1$ and $T^2$ may be hydrogen atoms, $T^3$ may be a hydrogen atom or a methyl group, and $T^4$ may be an ester group having 2 to 20 carbon atoms.

The carbon number of the hydrocarbon group with regard to $T^1$ to $T^4$ may be 1 or more with regard to the lower limit value, and the upper limit value thereof may be 20 or less, and also may be 10 or less.

The carbon number of the substituted alkoxy group with regard to $T^1$ to $T^4$ may be 1 or more with regard to the lower limit value, and the upper limit value thereof may be 20 or less, and also may be 10 or less.

The carbon number of the substituted ester group with regard to $T^1$ to $T^4$ may be 2 or more with regard to the lower limit value, and the upper limit value thereof may be 20 or less, and also may be 10 or less.

The carbon number of the alkoxy group with regard to $T^1$ to $T^4$ may be 1 or more with regard to the lower limit value, and the upper limit value thereof may be 20 or less, and also may be 10 or less.

The carbon number of the aryl group with regard to $T^1$ to $T^4$ may be 6 or more with regard to the lower limit value, and the upper limit value thereof may be 20 or less, and also may be 11 or less.

The carbon number of the ester group with regard to $T^1$ to $T^4$ may be 2 or more with regard to the lower limit value, and the upper limit value thereof may be 20 or less, and also may be 10 or less.

The carbon number of the silyl group with regard to $T^1$ to $T^4$ may be 3 or more with regard to the lower limit value, and the upper limit value thereof may be 18 or less, and also may be 12 or less. As the silyl group, there may be mentioned a trimethylsilyl group, a triethylsilyl group, a tri-n-propylsilyl group, a triisopropylsilyl group, a dimethylphenylsilyl group, a methyldiphenylsilyl group, and a triphenylsilyl group, etc.

In the ionomer of the present invention, from the viewpoint of easiness in production, $T^1$ and $T^2$ may be hydrogen atoms, $T^3$ may be a hydrogen atom or a methyl group, and $T^1$ to $T^3$ may be all hydrogen atoms.

Also, from the viewpoint of impact resistance, $T^4$ may be an ester group having 2 to 20 carbon atoms.

As the non-cyclic monomer, there may be specifically mentioned the case where $T^4$ which includes, is an ester group having 2 to 20 carbon atoms, and the like.

When $T^4$ is an ester group having 2 to 20 carbon atoms, as the non-cyclic monomer, there may be mentioned a compound represented by the structural formula: $CH_2=C(R^{21})CO_2(R^{22})$. Here, $R^{21}$ is a hydrogen atom or a hydrocarbon group having 1 to 10 carbon atoms, which may have a branch, ring and/or unsaturated bond. $R^{22}$ is a hydrocarbon group having 1 to 20 carbon atoms, which may have a branch, ring and/or unsaturated bond. Further, a hetero atom(s) may be contained in an optional position in $R^{22}$.

As the compound represented by the structural formula: $CH_2=C(R^{21})CO_2(R^{22})$, there may be mentioned a compound in which $R^{21}$ is a hydrogen atom or a hydrocarbon group having 1 to 5 carbon atoms. Also, there may be mentioned an acrylic acid ester in which $R^{21}$ is a hydrogen atom or a methacrylic acid ester in which $R^{21}$ is a methyl group.

Specific examples of the compound represented by the structural formula: $CH_2=C(R^{21})CO_2(R^{22})$ maybe mentioned, for example, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, cyclohexyl (meth)acrylate, octyl (meth)acrylate, 2-ethylhexyl (meth)acrylate, nonyl (meth)acrylate, decyl (meth)acrylate, dodecyl (meth)acrylate, octadecyl (meth)acrylate, phenyl (meth)acrylate, toluyl (meth)acrylate, benzyl (meth)acrylate, etc.

Specific compounds may be mentioned methyl acrylate, ethyl acrylate, n-butyl acrylate (nBA), isobutyl acrylate (iBA), t-butyl acrylate (tBA) and 2-ethylhexyl acrylate, etc., and in particular, it may be n-butyl acrylate (nBA), isobutyl acrylate (iBA) and t-butyl acrylate (tBA).

Incidentally, the non-cyclic monomer may be one kind, or may be a plural kind.

·Cyclic monomer

[Formula 4]

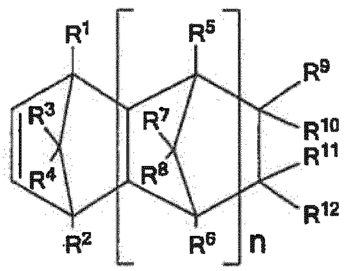

・・・(2)

[in the general formula (2), $R^1$ to $R^{12}$ each may be the same or different from each other, and each is selected from the group consisting of a hydrogen atom, a halogen atom and a hydrocarbon group having 1 to 20 carbon atoms, $R^9$ and $R^{10}$, and $R^{11}$ and $R^{12}$may be integrated to form a divalent organic group, respectively, and $R^9$ or $R^{10}$, and $R^{11}$ or $R^{12}$ may form a ring with each other.

Also, n indicates 0 or a positive integer, and when n is 2 or more, $R^5$ to $R^8$ may be the same or different from each other in each repeating unit.]

As the cyclic monomer, there may be mentioned a norbornene-based olefin, etc., and may be mentioned compounds having a skeleton of a cyclic olefin such as norbornene, vinyl norbornene, ethylidene norbornene, norbomadiene, tetracyclododecene, tricyclo[4.3.0.$1^{2,5}$]deca-3-ene, etc., which may be 2-norbornene (NB) and tetracyclo[6.2.1.$1^{3,6}$.$0^{2,7}$]dodeca-4-ene, etc.

(4) Copolymer (P)

The copolymer (P) which becomes a base resin of the ionomer used in the present invention comprises a structural unit (A) derived from ethylene and/or an $\alpha$-olefin having 3 to 20 carbon atoms and a structural unit (B) derived from a monomer having a carboxyl group(s) and/or a dicarboxylic anhydride group(s) as essential constitutional units, and further, if necessary, contains an optional structural unit (C) other than the above-mentioned (A) and (B), and these structural units are substantially copolymerized linearly, preferably random copolymerized. The term "substantially linearly" refer to the state that the copolymer does not have branches or frequency of appearing branched structure is low, and the copolymer can be regarded as a linear state. Specifically, it refers to the state in which the phase angle $\delta$ of the copolymer is 50 degrees or more under the conditions mentioned later.

The copolymer (P) according to the present invention is required to contain each one or more kinds of the structural unit (A) and the structural unit (B), and to contain two or more kinds of the monomer units in total, and it may contain an optional structural unit (C) other than the above-mentioned (A) and (B).

The structural unit and the amounts of the structural units of the copolymer according to the present invention will be explained.

A structure derived from each one molecule of ethylene and/or an $\alpha$-olefin having 3 to 20 carbon atoms (A), a monomer (B) having a carboxyl group and/or a dicarboxylic anhydride group, and an optional monomer (C) other than (A) and (B) is defined to be one structural unit in the copolymer.

And when the entire structural units in the copolymer is made 100 mol%, a ratio of each structural unit is expressed in mol%, which is an amount of the structural unit.

Amount of structural unit of ethylene and/or $\alpha$-olefin having 3 to 20 carbon atoms (A):

A lower limit of an amount of the structural unit of the structural unit (A) according to the present invention is selected from 60.0 mol% or more, preferably 70.0 mol% or more, more preferably 80.0 mol% or more, further preferably 85.0 mol% or more, further more preferably 90.0 mol% or more, and particularly preferably 91.2 mol% or more, and an upper limit is selected from 97.9 mol% or less, preferably 97.5 mol% or less, more preferably 97.0 mol% or less, and further preferably 96.5 mol% or less.

If the amount of the structural unit derived from ethylene and/or an $\alpha$-olefin having 3 to 20 carbon atoms (A) is less than 60.0 mol%, toughness of the copolymer is inferior, while if it is more than 97.9 mol%, crystallinity of the copolymer becomes high and transparency becomes sometimes worse.

Amount of structural unit of monomer having carboxyl group and/or dicarboxylic anhydride group (B):

A lower limit of an amount of the structural unit of the structural unit (B) according to the present invention is selected from 2.0 mol% or more, preferably 2.9 mol% or more, and more preferably 5.2 mol% or more, and an upper limit is selected from 20.0 mol% or less, preferably 15.0 mol% or less, more preferably 10.0 mol% or less, further preferably 8.0 mol% or less, particularly preferably 6.0 mol% or less, and most preferably 5.6 mol% or less.

If the amount of the structural unit derived from the monomer having a carboxyl group and/or a dicarboxylic anhydride group (B) is less than 2.0 mol%, adhesiveness of the copolymer with a different material having high polarity is not sufficient, while if it is more than 20.0 mol%, sufficient mechanical properties of the copolymer cannot be obtained in some cases.

Further, the monomer having a carboxyl group and/or a dicarboxylic anhydride group to be used may be alone, or may be used in combination of two or more kinds.

Amount of structural unit of optional monomer (C):

When an optional monomer (C) other than the above-mentioned (A) and (B) is contained in the constitutional elements of the ionomer of the present invention, an amount of the structural unit of the structural unit (C) according to the present invention is a lower limit of 0.001 mol% or more, preferably 0.010 mol% or more, more preferably 0.020 mol% or more, further preferably 0.1 mol% or more, further more preferably 1.9 mol% or more, and particularly preferably 2.0 mol% or more, and the upper limit is selected from 20.0 mol% or less, preferably 15.0 mol% or less, more preferably 10.0 mol% or less, further preferably 5.0 mol% or less, and particularly preferably 3.6 mol% or less.

For the purpose of further improving heat resistance, the optional monomer (C) may not be contained in the copolymer (P). Provided that when the structural unit derived from the optional monomer (C), a resin more excellent in transparency such as haze, etc., impact strength, etc., can be obtained. Also, if the amount of the structural unit derived from the optional monomer (C) is 0.001 mol% or more, flexibility of the copolymer becomes easily sufficient, while if it is 20.0 mol% or less, sufficient mechanical properties of the copolymer can be easily obtained.

Further, the optional monomer to be used may be alone, or may be used in combination of two or more kinds.

·Number of branches of copolymer per 1,000 carbons:

In the copolymer of the present invention, from the viewpoints of increasing modulus of elasticity and obtaining sufficient mechanical properties, an upper limit of a number of methyl branches calculated by $^{13}$C-NMR per 1,000 carbons may be 50 or less, may be 5 or less, may be 1 or less, and may be 0.5 or less, and a lower limit is not particularly limited, and it is better when the number is as little as possible. Also, an upper limit of a number of ethyl branches per 1,000 carbons may be 3.0 or less, may be 2.0 or less, may be 1.0 or less, and may be 0.5 or less, and a lower limit is not particularly limited, and it is better when the number is as little as possible. Further, an upper limit of a number of butyl branches per 1,000 carbons may be 7.0 or less, may be 5.0 or less, may be 3.0 or less, and may be 0.5 or less, and a lower limit is not particularly limited, and it is better when the number is as little as possible.

If the number of methyl branches is more than 50 per 1,000 carbons, modulus of elasticity of the copolymer is low and sufficient mechanical properties cannot be obtained in some cases.

Method for measuring amounts of structural units derived from monomer having carboxy group and/or dicarboxylic anhydride group, and optional monomer, and number of branches in copolymer:

Amounts of the structural units derived from the monomer having a carboxy group and/or a dicarboxylic anhydride group, and the optional monomer, and a number of branches per 1,000 carbons in the copolymer of the present invention can be obtained by using $^{13}$C-NMR spectrum. $^{13}$C-NMR is measured by the following method.

200 to 300 mg of a sample is charged in an NMR sample tube having an inner diameter of 10 mmϕ with 2.4 ml of a mixed solvent of o-dichlorobenzene ($C_6H_4Cl_2$) and deuterated benzene bromide ($C_6D_5Br$) ($C_6H_4Cl_2/C_6D_5Br$=2/1 (volume ratio)) and hexamethyldisiloxane which is a standard substance of chemical shift, and after replacing with nitrogen, the tube is sealed and the mixture is dissolved under heating to make a uniform solution as an NMR measurement sample.

NMR measurement is carried out using an AV400M type NMR apparatus manufactured by Brucker Japan Co., Ltd. equipped with a 10 mmϕ cryoprobe at 120°C.

$^{13}$C-NMR is measured with a temperature of the sample at 120°C, a pulse angle of 90°, a pulse interval of 51.5 seconds, a number of integrations of 512 times or more and a reverse gate decoupling method.

The chemical shift is set the $^{13}$C signal of hexamethyldisiloxane to 1.98 ppm, and the chemical shift of the signals by the other $^{13}$C is based on this.

In the obtained $^{13}$C-NMR, signals specific to the monomer or branches possessed by the copolymer are identified, and by comparing the strength thereof, an amount of the structural unit and a number of branches of each monomer in the copolymer can be analyzed. The positions of the signals specific to the monomer or branches can be referred to known data or can be uniquely identified depending on the sample. Such an analytical method can be generally carried out for those skilled in the art.

Weight average molecular weight (Mw) and molecular weight distribution (Mw/Mn):

A lower limit of the weight average molecular weight (Mw) of the copolymer according to the present invention is generally 1,000 or more, preferably 6,000 or more, and more preferably 10,000 or more, and an upper limit is generally 2,000,000 or less, preferably 1,500,000 or less, further preferably 1,000,000 or less, particularly suitably 800,000 or less, and most preferably 100,000 or less.

If Mw is less than 1,000, physical properties such as mechanical strength and impact resistance, etc., of the copolymer are not sufficient, while if Mw exceeds 2,000,000, melt viscosity of the copolymer becomes extremely high, and molding processing of the copolymer becomes difficult in some cases.

A ratio (Mw/Mn) of the weight average molecular weight (Mw) and the number average molecular weight (Mn) of the copolymer according to the present invention is generally in the range of 1.5 to 4.0, preferably 1.6 to 3.5, and further preferably 1.9 to 2.3. If Mw/Mn is less than 1.5, various kinds of processability including molding of the copolymer are not sufficient, and if it exceeds 4.0, mechanical properties of the copolymer are inferior in some cases.

Also, in the present specification, (Mw/Mn) is sometimes expressed as a molecular weight distribution parameter.

The weight average molecular weight (Mw) and the number average molecular weight (Mn) of the copolymer according to the present invention can be obtained by gel permeation chromatography (GPC). Also, the molecular weight distribution parameter (Mw/Mn) is obtained by, further obtaining the number average molecular weight (Mn) by gel permeation chromatography (GPC), and a ratio of Mw and Mn, Mw/Mn is calculated.

An example of the measurement method of GPC in accordance with the present invention is as follows.

(Measurement condition)

Used model: 150C manufactured by Waters Corp.
Detector: MIRAN1A·IR detector (measurement wavelength: 3.42 μm) manufacture d by FOXBORO
Measurement temperature: 140°C
Solvent: Ortho-dichlorobenzene (ODCB)
Column: AD806M/S (3 columns) manufactured by SHOWA DENKO K.K.
Flow rate: 1.0 mL/min
Injection amount: 0.2 mL

(Preparation of sample)

The sample was prepared as a solution of 1 mg /mL using ODCB (containing 0.5 mg /mL of BHT (2,6-di-t-butyl-4-methylphenol)), and dissolved at 140°C over about 1 hour.

(Calculation of molecular weight (M))

It is carried out by the standard polystyrene method, and conversion from the retention volume to the molecular weight is carried out using a calibration curve previously prepared by the standard polystyrenes. The standard polystyrenes to be used are, for example, a brand of (F380, F288, F128, F80, F40, F20, F10, F4, F1, A5000, A2500, A1000) manufactured by TOSOH CORPORATION, and monodispersed polystyrenes (each 0.07 mg/ml solution of S-7300, S-3900, S-1950, S-1460, S-1010, S-565, S-152, S-66.0, S-28.5 and S-5.05) manufactured by SHOWA DENKO K.K., etc. A calibration curve is prepared by injecting 0.2 mL of a solution dissolved in ODCB (containing 0.5 mg/mL of BHT) so that each is contained to be 0.5 mg/mL. As the calibration curve, a cubic equation obtained by approximating the least squares method, or logarithmic values of the elution time and the molecular weight are approximated by a quaternary equation, etc., is used. For the viscosity formula $[\eta]=K\times M\alpha$ to be used for conversion to the molecular weight (M), the following numerical values are used.

Polystyrene (PS): $K=1.38\times10^{-4}$, $\alpha=0.7$
Polyethylene (PE): $K=3.92\times10^{-4}$, $\alpha=0.733$
Polypropylene (PP): $K=1.03\times10^{-4}$, a=0.78

·Melting point (Tm, °C):

The melting point of the copolymer according to the present invention is indicated by the maximum peak temperature of the endothermic curve measured by a differential scanning calorimeter (DSC). The maximum peak temperature indicates the temperature of the peak in which the height from the baseline is the maximum, when multiple peaks are shown in the endothermic curve obtained when the vertical axis is a heat flow (mW) and the horizontal axis is a temperature (°C) in the DSC measurement, and indicates the temperature of the peak when the peak is one.

The melting point is preferably a lower limit of 50°C or higher, more preferably 70°C or higher, and further preferably 90°C or higher from the point of heat resistance. The melting point is preferably an upper limit of 140°C or lower, more preferably 138°C or lower, further preferably 135°C or lower, and further more preferably 110°C or lower from the point of obtaining sufficient adhesiveness with different materials having high polarity.

In the present invention, the melting point can be obtained by, for example, using DSC (DSC7020) manufactured by SII NanoTechnology Co., Ltd., from the absorption curve when about 5.0 mg of the sample is charged in an aluminum pan, elevating the temperature at 10°C/min to 200°C, and after retaining at the same temperature of 200°C for 5 minutes, lowering the temperature at 10°C/min to 20°C, and after retaining at the same temperature of 20°C for 5 minutes, again, elevating the temperature at 10°C/min to 200°C.

·Molecular structure of copolymer:

The molecular chain terminal of the copolymer according to the present invention may be the structural unit (A) of ethylene and/or an α-olefin having 3 to 20 carbon atoms, may be the structural unit (B) of the monomer having a carboxyl group and/or a dicarboxylic anhydride group, or may be the structural unit (C) of the optional monomer other than (A) and (B).

Also, the copolymer according to the present invention may be mentioned a random copolymer, a block copolymer, and a graft copolymer, etc., of the structural unit (A) of ethylene and/or an α-olefin having 3 to 20 carbon atoms, the structural unit (B) of the monomer having a carboxyl group and/or a dicarboxylic anhydride group, and, if necessary, the structural unit (C) of an optional monomer. Among these, it may be a random copolymer capable of containing a large amount of the structural unit (B).

A molecular structure example (1) of a general ternary copolymer is shown in the following.

The random copolymer means a copolymer in which the probability that the structural unit (A) of ethylene and/or an α-olefin having 3 to 20 carbon atoms, the structural unit (B) of the monomer having a carboxyl group and/or a dicarboxylic anhydride group and the structural unit (C) of the optional monomer of the molecular structure example (1) shown below find each structural unit at a position in an arbitrary molecular chain is irrelevant to the kind of the adjacent structural unit.

As shown below, in the molecular structure example (1) of the copolymer, the structural unit (A) of ethylene and/or an α-olefin having 3 to 20 carbon atoms, the structural unit (B) of the monomer having a carboxyl group and/or a dicarboxylic anhydride group and the structural unit (C) of the optional monomer form a random copolymer.

[Formula 5] -ABCAAABBCBAABACCAA-

· · · Molecular structure example (1)

Incidentally, when a molecular structure example (2) of the copolymer in which the structural unit (B) of the monomer having a carboxyl group and/or a dicarboxylic anhydride group is introduced by graft modification is also mentioned for reference, a part of the copolymer in which the structural unit (A) of ethylene and/or an α -olefin having 3 to 20 carbon atoms and the structural unit (C) of the optional monomer are copolymerized is graft modified by the structural unit (B) of the monomer having a carboxyl group and/or a dicarboxylic anhydride group.

[Formula 6]

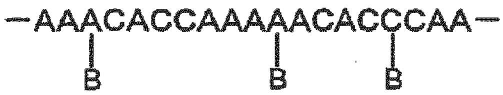

· · · Example (2) of molecular structure

Also, it is possible to confirm random copolymerizability of the copolymer by various methods, a method of judging random copolymerizability from the relationship between the comonomer content and the melting point of the copolymer is described in detail in JP 2015-163691A and JP 2016-079408A. From the above-mentioned documents, it can be judged that randomness is low when the melting point (Tm, °C) of the copolymer is higher than -3.74×[Z]+130 (provided that [Z] is a comonomer content/mol%).

In the copolymer according to the present invention which is a random copolymer, it is preferred that the melting point (Tm, °C) observed by the differential scanning calorimetry measurement (DSC) and the total content [Z] (mol%) of the structural unit (B) of the monomer having a carboxyl group and/or a dicarboxylic anhydride group and the structural unit (C) of the optional monomer satisfy the following formula (I).

$$50<Tm<-3.74\times[Z]+130\cdots(I)$$

When the melting point (Tm, °C) of the copolymer is higher than -3.74×[Z]+ 130(°C), random copolymerizability is low, so that mechanical properties such as impact strength, etc., are inferior, while when the melting point is lower than 50°C, heat resistance is inferior in some cases.

Further, the copolymer according to the present invention is preferably a material produced in the presence of a transition metal catalyst from the viewpoint of making the molecular structure linear.

Incidentally, it has been known that the molecular structure of a copolymer differs depending on the production method such as polymerization by a high-pressure radical polymerization method process, polymerization using a metal catalyst, etc.

It is possible to control this difference in molecular structure by selecting the production method, and for example, as described in JP 2010-150532A, its molecular structure can be estimated by the complex modulus of elasticity measured by a rotary rheometer.

·Phase angle δ at absolute value G*=0.1 MPa of complex modulus of elasticity:

In the copolymer of the present invention, a lower limit of a phase angle δ at the absolute value G*=0.1 MPa of a complex modulus of elasticity measured by a rotary rheometer may be 50 degrees or more, may be 51 degrees or more, may be 54 degrees or more, may be 56 degrees or more, and may be 58 degrees or more, and an upper limit may be 75 degrees or less, and may be 70 degrees or less.

More specifically, when the phase angle δ (G*=0.1 MPa) at an absolute value G*=0.1 MPa of a complex modulus of elasticity measured by a rotary rheometer is 50 degrees or more, the molecular structure of the copolymer shows a linear state structure and a structure that does not contain any long-chain branches, or a substantially linear state structure that contains a small amount of long-chain branches that do not affect the mechanical strength.

Also, when the phase angle δ (G*=0.1 MPa) at an absolute value G*=0.1 MPa of a complex modulus of elasticity measured by a rotary rheometer is lower than 50 degree, the molecular structure of the copolymer shows a structure containing long-chain branches excessively, and becomes a material inferior in mechanical strength.

The phase angle δ at an absolute value G*=0.1 MPa of a complex modulus of elasticity measured by a rotary rheometer is affected by both of the molecular weight distribution and long-chain branches. However, if it is limited to a copolymer having Mw/Mn≦4, more preferably Mw/Mn≦3, it can be an index of the amount of long-chain branches, and the long-chain branches contained in the molecular structure is larger, the δ (G*=0.1 MPa) value becomes smaller. Incidentally, if Mw/Mn of the copolymer is 1.5 or more, the δ (G*=0.1 MPa) value never exceed 75 degrees even if the molecular structure is a structure containing no long-chain branches.

A measurement method of complex modulus of elasticity is as follows.

A sample is charged in a mold for heat press with a thickness of 1.0 mm, preheated in a hot press machine at a surface temperature of 180°C for 5 minutes, a residual gas in a molten resin is degassed by repeating pressurization and depressurization, and the sample is further pressurized at 4.9 MPa and maintained for 5 minutes. Thereafter, the sample is transferred to a press machine with a surface temperature of 25°C to cool it at a pressure of 4.9 MPa for 3 minutes, whereby a press plate comprising the sample having a thickness of about 1.0 mm is prepared. The press plate comprising the sample is processed into a circle with a diameter of 25 mm, which is made a sample, and dynamic viscoelasticity thereof is measured using an ARES type rotary rheometer manufactured by Rheometrics as a measurement device of dynamic viscoelasticity characteristics under nitrogen atmosphere and the following conditions.

- Plate: ϕ25 mm parallel plate
- Temperature: 160°C
- Strain amount: 10%
- Measurement angular frequency range: $1.0\times10^{-2}$ to $1.0\times10^{2}$ rad/s
- Measurement interval: 5 point/decade

A phase angle δ is plotted to the common logarithm log G* of the absolute value G* (Pa) of a complex modulus of elasticity, and the value of δ (degree) at the point corresponding to log G*=5.0 is made δ (G*=0.1 MPa). When there is no point corresponding to log G*=5.0 in the measurement points, the δ value at log G*=5.0 is obtained by linear interpolation using two points around log G*=5.0. Also, when all the measurement points are log G*<5, the δ value at log G*=5.0 is obtained by extrapolating the δ value at log G*=5.0 using the three points from the largest log G* value with the quadratic curve.

·With regard to production of copolymer

The copolymer according to the present invention is preferably a material produced in the presence of a transition metal catalyst from the viewpoint of making the molecular structure linear state.

·Polymerization catalyst

A kind of the polymerization catalyst used for production of the copolymer according to the present invention is not particularly limited as long as it is capable of copolymerizing the structural unit (A), the structural unit (B) and the optional structural unit (C) and, for example, there may be mentioned transition metal compounds of Group 5 to Group 11 having a chelating ligand.

Specific examples of preferable transition metals may be mentioned vanadium atom, niobium atom, tantalum atom, chromium atom, molybdenum atom, tungsten atom, manganese atom, iron atom, platinum atom, ruthenium atom, cobalt atom, rhodium atom, nickel atom, palladium atom, copper atom, etc. Among these, it is preferably transition metals of Group 8 to Group 11, further preferably transition metals of Group 10, and particularly preferably nickel (Ni) and palladium (Pd). These metals may be single or may be used in combination of a plural kinds.

The chelating ligand has at least two atoms selected from the group consisting of P, N, O, and S, includes a ligand which is bidentate or multidentate, and is electrically neutral or anionic. In a review by Brookhart et al., structure

of the chelating ligands is exemplified (Chem. Rev., 2000,100,1169).

As the chelating ligand, there may be preferably mentioned a bidentate anionic P and O ligands. As the bidentate anionic P and O ligands, there may be mentioned, for example, phosphorus sulfonic acid, phosphorus carboxylic acid, phosphorus phenol and phosphorus enolate. As the chelating ligands, as others, there may be mentioned bidentate anionic N and O ligands. As the bidentate anionic N and O ligands, there may be mentioned, for example, salicylamide iminate and pyridine carboxylic acid. As the chelating ligand, as others, there may be mentioned diimine ligand, diphenoxide ligand and diamide ligand, etc.

The structure of the metal complex obtained from the chelating ligand is represented by the following structural formula (a) or (b) in which an arylphosphine compound, an arylarsine compound or an arylantimony compound each may have a substituent(s) is coordinated.

[Formula 7]

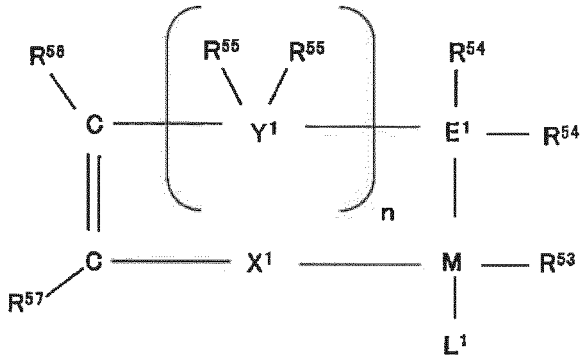

Structural formula (a)

[Formula 8]

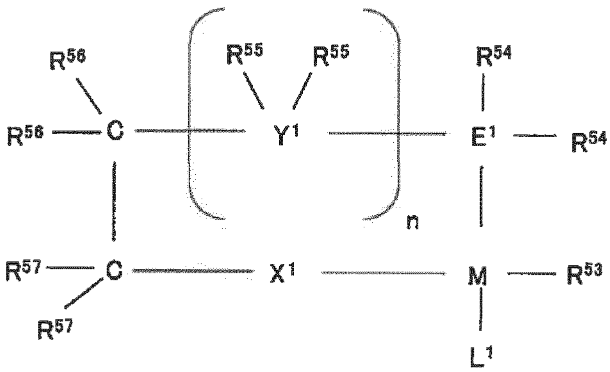

Structural formula (b)

[in the structural formula (a) and the structural formula (b),

M represents a transition metal belonging to any of Group 5 to Group 11 of the periodic table, i.e., various transition metals as mentioned above.

$X^1$ represents oxygen, sulfur, $-SO_3-$ or $-CO_2-$.

$Y^1$ represents carbon or silicon.

n represents an integer of 0 or 1.

$E^1$ represents phosphorus, arsenic or antimony.

$R^{53}$ and $R^{54}$ each independently represents hydrogen or a hydrocarbon group having 1 to 30 carbon atoms which may contain a hetero atom(s).

$R^{55}$s each independently represents hydrogen, halogen or a hydrocarbon group having 1 to 30 carbon atoms which

may contain a hetero atom(s).

$R^{56}$ and $R^{57}$ each independently represents hydrogen, halogen or a hydrocarbon group having 1 to 30 carbon atoms which may contain a hetero atom(s), $OR^{52}$, $CO_2R^{52}$, $CO_2M'$, $C(O)N(R^{51})_2$, $C(O)R^{52}$, $SR^{52}$, $SO_2R^{52}$, $SOR^{52}$, $OSO_2R^{52}$, $P(O)(OR^{52})_{2-y}(R^{51})_y$, CN, $NHR^{52}$, $N(R^{52})_2$, $Si(OR^{51})_{3-x}(R^{51})_x$, $OSi(OR^{51})_{3-x}(R^{51})_x$, $NO_2$, $SO_3M'$, $PO_3M'_2$, $P(O)(OR^{52})_2M'$ or an epoxy-containing group.

$R^{51}$ represents hydrogen or a hydrocarbon group having 1 to 20 carbon atoms.

$R^{52}$ represents a hydrocarbon group having 1 to 20 carbon atoms.

M' represents an alkali metal, an alkaline earth metal, ammonium, quaternary ammonium or phosphonium, x represents an integer of 0 to 3 and y represents an integer of 0 to 2.

Incidentally, $R^{56}$ and $R^{57}$ may be bonded to each other to form an alicyclic ring, an aromatic ring or a heterocyclic ring containing a hetero atom(s) selected from oxygen, nitrogen or sulfur. At this time, a number of the ring member is 5 to 8, and the ring may have or may not have a substituent(s).

$L^1$ represents a ligand coordinated to M.

Also, $R^{53}$ and $L^1$ may be bonded to each other to form a ring.]

More preferably, the complex which becomes a polymerization catalyst is a transition metal complex represented by the following structural formula (c).

[Formula 9]

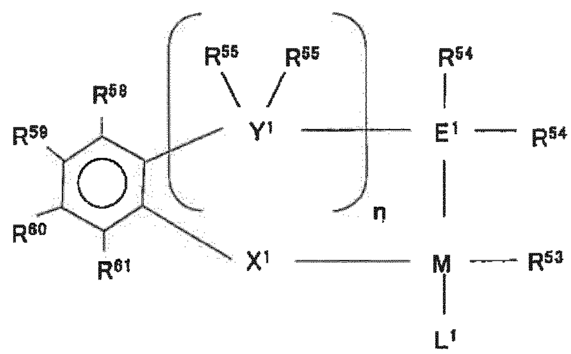

Structural formula (c)

[in the structural formula (c),

M represents a transition metal belonging to any of Groups 5 to 11 of the periodic table, i.e., various transition metals as mentioned above.

$X^1$ represents oxygen, sulfur, $-SO_3-$ or $-CO_2-$.

$Y^1$ represents carbon or silicon.

n represents an integer of 0 or 1.

$E^1$ represents phosphorus, arsenic or antimony.

$R^{53}$ and $R^{54}$ each independently represents hydrogen or a hydrocarbon group having 1 to 30 carbon atoms which may contain a hetero atom(s).

$R^{55}$s each independently represents hydrogen, halogen or a hydrocarbon group having 1 to 30 carbon atoms which may contain a hetero atom(s).

$R^{58}$, $R^{59}$, $R^{60}$ and $R^{61}$ each independently represents hydrogen, halogen or a hydrocarbon group having 1 to 30 carbon atoms which may contain a hetero atom(s), $OR^{52}$, $CO_2R^{52}$, $CO_2M'$, $C(O)N(R^{51})_2$, $C(O)R^{52}$, $SR^{52}$, $SO_2R^{52}$, $SOR^{52}$, $OSO_2R^{52}$, $P(O)(OR^{52})_{2-y}(R^{51})_y$, CN, $NHR^{52}$, $N(R^{52})_2$, $Si(OR^{51})_{3-x}(R^{51})_x$, $OSi(OR^{51})_{3-x}(R^{51})_x$, $NO_2$, $SO_3M'$, $PO_3M'_2$, $P(O)(OR^{52})_2M'$ or an epoxy-containing group.

$R^{51}$ represents hydrogen or a hydrocarbon group having 1 to 20 carbon atoms.

$R^{52}$ represents a hydrocarbon group having 1 to 20 carbon atoms.

M' represents an alkali metal, an alkaline earth metal, ammonium, quaternary ammonium or phosphonium, x represents an integer of 0 to 3 and y represents an integer of 0 to 2.

Incidentally, a plural number of the groups optionally selected from $R^{58}$ to $R^{61}$ may be bonded to each other to form an alicyclic ring, an aromatic ring or a heterocyclic ring containing a hetero atom(s) selected from oxygen, nitrogen or sulfur. At this time, a number of the ring member is 5 to 8, and the ring may have or may not have a substituent(s).

$L^1$ represents a ligand coordinated to M.
Also, $R^{53}$ and $L^1$ may be bonded to each other to form a ring.]

Here, as a catalyst of the transition metal compound of Group 5 to Group 11 having a chelating ligand, catalyst such as the so-called SHOP-based catalyst and Drent-based catalyst, etc., have been representatively known.
The SHOP-based catalyst is a catalyst in which a phosphorus-based ligand having an aryl group which may have a substituent(s) is coordinated to a nickel metal (for example, see WO2010-050256).
Also, the Drent-based catalyst is a catalyst in which a phosphorus-based ligand having an aryl group which may have a substituent(s) is coordinated to a palladium metal (for example, see JP 2010-202647A).

·Polymerization method of copolymer:

The polymerization method of the copolymer according to the present invention is not limited.
As the polymerization method, there may be mentioned slurry polymerization in which at least a part of the formed polymer becomes a slurry in a medium, bulk polymerization using the liquefied monomer itself as a medium, vapor phase polymerization carried out in a vaporized monomer or high pressure ion polymerization in which at least a part of the formed polymer is dissolved in the monomer liquefied at high temperature and high pressure, etc.
As the polymerization format, it may be any format of batch polymerization, semi-batch polymerization or continuous polymerization.
Also, living polymerization may be carried out, or polymerization may be carried out while simultaneously causing chain transfer.
Further, at the time of the polymerization, it may be carried out by using the so-called chain shuttling agent (CSA) in combination, chain shuttling reaction or coordinative chain transfer polymerization (CCTP) may be carried.
With regard to the specific producing process and conditions, for example, these are disclosed in JP 2010-260913A and JP 2010-202647A.

·Introducing method of carboxyl group and/or dicarboxylic anhydride group into copolymer:

Introducing method of the carboxyl group and/or the dicarboxylic anhydride group into the copolymer according to the present invention is not particularly limited. A carboxyl group and/or a dicarboxylic anhydride group can be introduced by various· methods in the range as long as the gist of the present invention is not deviated.
The method for introducing the carboxyl group and/or the dicarboxylic anhydride group may be mentioned, for example, a method in which a comonomer having a carboxyl group and/or a dicarboxylic anhydride group is directly copolymerized, a method in which after the other monomer(s) having a functional group(s) that generates a carboxyl group is/are copolymerized, a carboxyl group and/or a dicarboxylic anhydride group is/are introduced by modification, etc.
As a method for introducing a carboxyl group and/or a dicarboxylic anhydride group by modification, there may be mentioned, for example, when a carboxylic acid is to be introduced, a method in which after copolymerizing an acrylic acid ester as a precursor, the product is hydrolyzed to change to a carboxylic acid, a method in which after copolymerizing a t-butyl acrylate as a precursor, the product is decomposed under heating to change to a carboxylic acid, etc.
When the above-mentioned hydrolysis or decomposition under heating is carried out, a conventionally known acidic or basic catalyst may be used as an additive for promoting the reaction. As the acidic or basic catalyst, it is not particularly limited, and may be optionally used, for example, a hydroxide of an alkali metal or an alkaline earth metal such as sodium hydroxide, potassium hydroxide, lithium hydroxide, etc., a carbonate of an alkali metal or an alkaline earth metal such as sodium hydrogen carbonate, sodium carbonate, etc., solid acid such as montmorillonite, etc., an inorganic acid such as hydrochloric acid, nitric acid, sulfuric acid, etc., an organic acid such as formic acid, acetic acid, benzoic acid, citric acid, para-toluenesulfonic acid, trifluoroacetic acid, trifluoromethanesulfonic acid, etc.
From the viewpoints of reaction promoting effect, price, equipment corrosive property, etc., sodium hydroxide, potassium hydroxide, sodium carbonate, para-toluenesulfonic acid and trifluoroacetic acid are preferable, and para-toluenesulfonic acid and trifluoroacetic acid are more preferable.

(5) Ionomer

The ionomer according to the present invention is an ionomer in which at least a part of the carboxyl group and/or the dicarboxylic anhydride group of the structural unit (B) in the copolymer (P) is converted to a metal-containing carboxylic acid salt(s) containing at least one kind of a metal ion selected from Group 1, Group 2 or Group 12 of the periodic table, which has substantially linear structure. Incidentally, the ionomer can be obtained by allowing a metal salt to act on the ionomer base resin as mentioned later, and at that time, a reaction that cleaves the molecular chain of the polymer does not generally occur. Therefore, the parameters regarding the structure such as a molar ratio of the

comonomers, degree of branches, randomness, etc., are generally preserved between the ionomer base resin and the ionomer.

·Structure of ionomer

The ionomer according to the present invention has substantially linear structure similarly to the copolymer according to the present invention, so that it is characterized in that a phase angle $\delta$ at an absolute value G*=0.1 MPa of a complex modulus of elasticity measured by a rotary rheometer is 50 to 75 degrees.

If the phase angle $\delta$ (G*=0.1 MPa) is lower than 50 degrees, the molecular structure of the ionomer shows a structure containing long-chain branches excessively, and becomes a material inferior in mechanical strength. As mentioned above, if Mw/Mn≤4, the value of the phase angle $\delta$ becomes an index of an amount of the long-chain branches. If Mw/Mn of the ionomer is 1.5 or more, there is no case where $\delta$ (G*=0.1 MPa) value exceeds 75 degrees even in the case where the molecular structure is a structure where it does not contain the long-chain branches.

From the point of improving mechanical strength, the lower limit of the phase angle $\delta$ is preferably 51 degrees or more, more preferably 54 degree or more, further preferably 56 degree or more, and further more preferably 58 degree or more, and the upper limit is not particularly limited and it is better when it is closer to 75 degree.

·Melting point of ionomer (Tm, °C)

The melting point (Tm, °C) of the ionomer according to the present invention is, from the point of heat resistance, preferably the lower limit of 50°C or higher, more preferably 70°C or higher, and further preferably 90°C or higher. The melting point of the ionomer according to the present invention is, from the point of obtaining sufficient adhesiveness with different materials having high polarity, preferably the upper limit of 140°C or lower, more preferably 138°C or lower, further preferably 135°C or lower, and further more preferably 110°C or lower. In particular, when the ionomer comprises the binary copolymer of the structural unit (A) and (B) as a base, the melting point of the ionomer is preferably 90°C to 140°C, further preferably 90°C to 138°C, and most preferably 90°C to 135°C. When the ionomer comprises a multinary copolymer of ternary or more of the structural units (A), (B) and (C) as a base, the melting point of the ionomer is preferably lower than 100°C, further preferably lower than 95°C, and most preferably lower than 90°C.

Further, it is preferable that the relationship satisfies the above formula (I): 50< Tm <-3.74x[Z]+130. Also, the relationship between the melting point Tm (°C) of the ionomer resin alone and the tensile impact strength T (kJ/$m^2$) preferably satisfies the formula ($\alpha$), ($\beta$) or ($\gamma$) which will be described later at the column of the resin composition.

·Crystallinity (%):

In the ionomer of the present invention, the crystallinity measured by the differential scanning calorimetry measurement (DSC) is not particularly limited, and, from the point that toughness becomes sufficient, the lower limit is preferably exceeding 0%, more preferably exceeding 5%, and further preferably 7% or more, and from the point of transparency, the upper limit is preferably 50% or less, and further preferably 25% or less.

If the crystallinity is 0%, toughness of the ionomer is not sufficient, while if the crystallinity is higher than 50%, transparency of the copolymer is inferior in some cases. Incidentally, the crystallinity is an index of transparency, and it can be judged that the lower the crystallinity of the ionomer, the better the transparency.

In the present invention, the crystallinity can be determined by, for example, determining the heat of fusion ($\Delta$H) from the melting endothermic peak area obtained by the same method as the measurement of the melting point, and dividing the heat of fusion by the heat of fusion 293 J/g which is a complete crystal of high-density polyethylene (HDPE).

Metal ion

The metal ion contained in the ionomer according to the present invention is not particularly limited, and a metal ion used in the conventionally known ionomer can be contained. As the metal ion, among these, a metal ion of Group 1, Group 2 or Group 12 of the periodic table is preferable, and at least one kind selected from the group consisting of $Li^+$, $Na^+$, $K^+$, $Rb^+$, $Cs^+$, $Mg^{2+}$, $Ca^{2+}$, $Sr^{2+}$, $Ba^{2+}$ and $Zn^{2+}$ is more preferable. It can be mentioned particularly preferably at least one kind selected from the group consisting of $Li^+$, $Na^+$, $K^+$, $Mg^{2+}$, $Ca^{2+}$ and $Zn^{2+}$, and further preferably $Na^+$, and $Zn^{2+}$.

These metal ions can be contained two or more kinds in admixture, if necessary.

·Degree of neutralization (mol%)

A content of the metal ion is preferably to contain an amount that neutralize at least a part or whole of the carboxyl group and/or the dicarboxylic anhydride group in the copolymer as the base polymer, and preferable degree of neutralization (average degree of neutralization) is 5 to 95 mol%, more preferably 10 to 90 mol%, and further preferably 20 to 80 mol%.

Incidentally, the degree of neutralization can be obtained from a ratio of a total molar amount of the valence of the metal ion×molar amount, to the total molar amount of the carboxy group containable in the carboxy group and/or the dicarboxylic anhydride group in the copolymer.

The dicarboxylic anhydride group becomes a dicarboxylic acid by ring-opening at the time of forming a carboxylic acid salt, so that the total molar amount of the carboxy group is obtained assuming that 1 mol of the dicarboxylic anhydride group has 2 mol of the carboxy group. Also, for example, with regard to the divalent metal ion such as $Zn^{2+}$, etc., the total molar amount of the molecule of the degree of neutralization is calculated by 2×molar amount assuming that a salt can be formed with 2 mol of the carboxy group per 1 mol thereof.

When the degree of neutralization is high, tensile strength and tensile fracture stress of the ionomer are high, and tensile fracture strain is small, but melt flow rate (MFR) of the ionomer tends to be small. On the other hand, when the degree of neutralization is low, an ionomer having a suitable MFR can be obtained, but tensile elasticity and tensile fracture stress are low, and tensile fracture strain tends to be high.

Incidentally, the degree of neutralization can be calculated from an amount(s) of the carboxyl group and/or the dicarboxylic anhydride group and a molar ratio of the added metal ions.

·Production method of ionomer

The ionomer according to the present invention may be obtained treating the copolymer of ethylene and/or an α-olefin having 3 to 20 carbon atoms/unsaturated carboxylic acid obtained by the introducing method of the carboxyl group and/or the dicarboxylic anhydride group into the copolymer as mentioned above with a metal salt containing at least one kind of a metal ion selected from Group 1, Group 2 or Group 12 of the periodic table, and subjecting to a conversion step in which it is converted into a metal-containing carboxylic acid salt. Also, the ionomer according to the present invention may be obtained by heating the ethylene and/or an α-olefin having 3 to 20 carbon atoms/unsaturated carboxylic ester copolymer and subjecting to a heat conversion step in which at least a part of the ester group in the copolymer is converted to a metal-containing carboxylic acid salt containing at least one kind of a metal ion selected from Group 1, Group 2 or Group 12 of the periodic table.

When an ionomer is produced after introducing a carboxyl group and/or a dicarboxylic anhydride group into a polymer, the producing method is, for example, as follows. That is, it can be obtained by, according to circumstance, heating and kneading a substance which captures a metal ion such as an ethylene/methacrylic acid (MAA) copolymer, etc., with a metal salt to prepare a metal ion supply source, and then, adding the metal ion supply source to an ionomer base resin with an amount that gives a desired degree of neutralization, and kneading.

Also, in the heat conversion step, (i) the carboxylic acid in an ethylene and/or an α-olefin having 3 to 20 carbon atoms/unsaturated carboxylic acid copolymer may be converted into a metal-containing carboxylic acid salt by heating an ethylene and/or an α-olefin having 3 to 20 carbon atoms/unsaturated carboxylic ester copolymer, and hydrolyzing or thermally decomposing the same to make an ethylene and/or an α-olefin having 3 to 20 carbon atoms/unsaturated carboxylic acid copolymer, and then, reacting with a compound containing a metal ion of Group 1, Group 2 or Group 12 of the periodic table, and (ii) the ester group portion in the ethylene and/or an α-olefin having 3 to 20 carbon atoms/unsaturated carboxylic ester copolymer may be converted into the metal-containing carboxylic acid salt by hating an ethylene and/or an α-olefin having 3 to 20 carbon atoms/unsaturated carboxylic ester copolymer while hydrolyzing or thermally decomposing the ester group of the copolymer, and reacting with a compound containing a metal ion of Group 1, Group 2 or Group 12 of the periodic table.

Further, the compound containing a metal ion may be an oxide, a hydroxide, a carbonate, a bicarbonate, an acetate, a formate, etc., of a metal of Group 1, Group 2 or Group 12 of the periodic table.

The compound containing a metal ion may be supplied to a reaction system in the form of granules or fine powder, may be supplied to a reaction system after dissolving or dispersing in water or an organic solvent, or may be supplied to a reaction system by preparing a master batch using an ethylene/unsaturated carboxylic acid copolymer or olefin copolymer as a base polymer. In order to proceed the reaction smoothly, a method of preparing a masterbatch and supplying it to a reaction system is preferable.

Furthermore, the reaction with a compound containing a metal ion may be carried out melting and kneading with various types of apparatus such as a vent extruder, a Banbury mixer and a roll mill, and the reaction may be a batch system or a continuous method. Since the reaction can be smoothly carried out by discharging the by-producing water and carbon dioxide gas produced by the reaction by the deaerator, it is preferable to continuously carry out the reaction

using an extruder equipped with a degassing apparatus such as a bent extruder.

When reacting with the compound containing a metal ion, a small amount of water may be injected to promote the reaction.

The temperature for heating the ethylene and/or an $\alpha$-olefin having 3 to 20 carbon atoms/unsaturated carboxylic ester copolymer may be a temperature at which the ester becomes a carboxylic acid, and if the heating temperature is too low, the ester is not converted into a carboxylic acid, while if it is too high, decarbonylation and decomposition of the copolymer may proceed in some cases. Accordingly, heating temperature of the present invention is carried out preferably in the range of 80°C to 350°C, more preferably 100°C to 340°C, further preferably 150°C to 330°C, and further more preferably 200°C to 320°C.

A reaction time may vary depending on the heating temperature and reactivity at the ester group portion, etc., and generally 1 minute to 50 hours, more preferably 2 minutes to 30 hours, further preferably 2 minutes to 10 hours, more further preferably 2 minutes to 3 hours, and particularly preferably 3 minutes to 2 hours.

In the above-mentioned step, the reaction atmosphere is not particularly limited, and it is generally preferable to carry out the step under an inert gas stream. As examples of the inert gas, nitrogen, argon and carbon dioxide atmosphere can be used. A small amount of oxygen or air may be mixed therein.

The reactor used in the above-mentioned step is not particularly limited, and it is not limited as long as it is a method capable of stirring the copolymer substantially uniformly, a glass container equipped with a stirrer or an autoclave (AC) may be used, and any conventionally known kneader such as Brabender Plastograph, a single-screw or twin-screw extruder, a high-power screw kneader, a Banbury mixer, a kneader, a roll, etc., can be used.

Whether or not a metal ion is introduced into an ionomer base resin and becomes an ionomer can be confirmed by examining decrease in the peak derived from a carbonyl group of the carboxylic acid (dimer) by measuring an IR spectrum of the obtained resin. Similarly, the degree of neutralization can be confirmed, in addition to the calculation from the above-mentioned molar ratio, by examining decrease in the peak derived from a carbonyl group of the carboxylic acid (dimer), and increase in the peak derived from a carbonyl group of the carboxylic acid base.

<Ionomer physical property>

As the ionomer to be used in the present invention, those having any of the following physical properties or a combination thereof are preferable.

·MFR:

In the ionomer of the present invention, a lower limit of a melt flow rate (MFR) at a temperature of 190°C and a load of 2.16 kg is 0.1 g/10 min, preferably 1.0 g/10 min, and more preferably 5.0 g/10 min.

·Tensile impact strength:

In the ionomer of the present invention, tensile impact strength is 100 $KJ/m^2$ or more, preferably tensile impact strength is 700 $KJ/m^2$ or more, and further preferably 800 $KJ/m^2$ or more.

In the ionomer using a multinary copolymer of ternary-based or more as a base, an ionomer which accomplishes, in particular, tensile impact strength of 700 $KJ/m^2$ or more can be obtained. If tensile impact strength of the ionomer is within this range, even if there is rubbing, etc., accompanied by large deformation, a fear of breakage is reduced. The upper limit of the tensile impact strength is not particularly limited as long as it can be obtained from a material used for those skilled in the art.

2. Resin composition for injection molding or compression molding containing ethylene-based ionomer resin

The ionomer of the present invention may be used alone or as a resin composition to which other resin component(s) is/are formulated. Hereinafter, the terms "resin composition containing the ionomer" when used in a molded product include a composition containing the ionomer alone, or to which other resin component(s), additives, etc., is/are formulated. The other resin component(s) that can be formulated in the ionomer resin composition of the present invention is/are not particularly limited as long as it is compatible with the ionomer and does not impair the effects of the present invention. For example, there may be mentioned high-density polyethylene, medium-density polyethylene, low-density polyethylene, ethylene-vinyl acetate copolymer, ethylene-acrylic acid ester copolymer, and other ionomers, etc. Also, two or more kinds of materials can be used in combination. A formulation amount of these resin components is not particularly limited as long as the effects of the present invention are not impaired.

The resin composition of the present invention is characterized by containing the specific ionomer according to the present application, and the content thereof can be preferably selected from the range of 1 to 100% by weight,

optionally in combination with the intended use and other conditions.

In the resin composition of the present invention, the ionomer of the present invention is preferably contained in an amount of 10% by weight or more, more preferably contained in an amount of 30% by weight or more, further preferably contained in an amount of 50% by weight or more, and particularly preferably contained in an amount of 60% by weight or more. The upper limit value can be voluntarily selected from 100% by weight or less, 90% by weight or less, 70% by weight or less, 50% by weight or less, or 40% by weight or less.

When the content of the specific ionomer according to the invention of the present application in the resin composition is higher, it is possible to exhibit excellent physical properties, etc., due to the use of the ionomer sufficiently. From the viewpoints of other processability, physical properties to be required and cost, the blending amount can be voluntarily selected.

In the ionomer used in the present invention, various additives and polymer components to be added or formulated as necessary are mixed using a Henschel mixer, a super mixer, a tumbler type mixer, etc., and then, heated and kneaded using a uniaxial or biaxial extruder, a kneader, etc., and it may be pelletized.

·Melt flow rate (MFR) of resin composition for injection molding or compression molding containing ethylene-based ionomer resin

MFR of the resin composition for injection molding or compression molding containing the ethylene-based ionomer resin according to the present invention measured under the conditions of a temperature of 190°C and a load of 21.18N (=2.16 kg) in accordance with Table 1-Condition 7 of JIS K-7210 (1999) is 0.5 g/10 min or more, preferably 1.0 g/10 min or more, and more preferably 5.0 g/10 min or more. If the MFR is 0.5 g/10 min or more, good molding property can be obtained due to suitable fluidity. The upper limit of the MFR is not particularly determined, and is preferably 200 g/10 min or less, more preferably 100 g/10 min or less, and further preferably 50 g/10 min or less. If the MFR is in the range of 200 g/10 min or less, strength and long-term durability of the molded product are more heightened.

·Relationship between melting point Tm (°C) and tensile impact strength T (kJ/$m^2$) of resin composition for injection molding or compression molding containing ethylene-based ionomer resin

The relationship between the melting point Tm (°C) and the tensile impact strength T (kJ/$m^2$) of the resin composition for injection molding or compression molding containing the ethylene-based ionomer resin according to the present invention preferably satisfies the following formula (a), more preferably satisfies the following formula (β), and further preferably satisfies the following formula (γ).

$$Tm > -0.0177 \times T + 103.1 \cdots\cdots\cdots \text{formula } (\alpha)$$

$$Tm > -0.0177 \times T + 103.4 \cdots\cdots\cdots \text{formula } (\beta)$$

$$Tm > -0.0177 \times T + 103.7 \cdots\cdots\cdots \text{formula } (\gamma)$$

When the relationship between the melting point Tm (°C) and the tensile impact strength T (kJ/$m^2$) satisfies the formula (α), more preferably the formula (β), further preferably the formula (γ), it is preferable since a molded product having sufficiently well-balanced strength, heat resistance and long-term durability can be obtained from the resin composition.

In general, there is a trade-off relationship between the melting point and impact strength, but the resin composition of the present invention contains a specific ionomer so that it shows excellent balance between the melting point and impact strength that could not be achieved by the conventional ionomers.

·Melting point Tm of resin composition for injection molding or compression molding containing ethylene-based ionomer resin

The melting point Tm (°C) of the resin composition for injection molding or compression molding containing the ethylene-based ionomer resin according to the present invention is, in particular, when the ionomer is a binary copolymer of the structural units (A) and (B), preferably 90°C or higher, more preferably 92°C or higher, and further preferably 94°C or higher. If the melting point Tm (°C) is 90°C or higher, heat resistance of the molded product becomes better.

·Haze H of resin composition for injection molding or compression molding containing ethylene-based ionomer resin

The haze H (%) of the resin composition for injection molding or compression molding containing the ethylene-based ionomer resin according to the present invention measured in accordance with JIS K 7136-2000 is, in particular, when the ionomer is a multinary copolymer of ternary or more containing the structural unit (C), preferably 25% or less, more preferably less than 19%, further preferably less than 17%, and particularly preferably less than 15%. If the haze H (%) is 25% or less, the required transparency can be sufficiently satisfied, and if it is less than 19%, transparency of the molded product becomes better.

Additives

To the ionomer according to the present invention, the present invention may be formulated conventionally known additives such as antioxidants, ultraviolet absorbers, lubricants, antistatic agents, colorants, pigments, cross-linking agents, foaming agents, nucleating agents, flame retardants, conductive materials and fillers, as long as the gist of the present invention is not deviated.

3. Molding method

The composition of the present invention can be made a desired molded product by formulating various kinds of additives, etc., as necessary, pelletizing by mechanical melt mixing with a pelletizer, a homogenizer, etc., according to the conventional method, and then molding with various kinds of molding machines. As the molding method, various molding methods in injection molding or compression molding such as low pressure molding, injection compression molding, gas assist molding, two-color molding and in-mold molding can be adopted. The conditions for injection molding or compression molding are not particularly limited, and conventionally known conditions can be adopted by using the conventionally known molding apparatus.

EXAMPLES

Hereinafter, the present invention will be explained in more detail by referring to Examples and Comparative Examples, but the present invention is not limited to these Examples.

Incidentally, measurement and evaluation of physical properties in Examples and Comparative Examples are carried out by the methods shown below.

Also, no data in the table means not measured, and not detected means less than detection limit.

<Measurement and evaluation>

(1) Measurement of phase angle δ (G*=0.1 MPa) at absolute value G*=0.1 MPa of complex modulus of elasticity

1) Preparation of sample and measurement

A sample was charged in a mold for heat press with a thickness of 1.0 mm, preheated in a hot press machine at a surface temperature of 180°C for 5 minutes, a residual gas in a molten resin was degassed by repeating pressurization and depressurization, and the sample was further pressurized at 4.9 MPa and maintained for 5 minutes. Thereafter, it was transferred to a press machine with a surface temperature of 25°C to cool it at a pressure of 4.9 MPa for 3 minutes, whereby a press plate comprising the sample having a thickness of about 1.0 mm was prepared. The press plate comprising the sample was processed into a circle with a diameter of 25 mm, which was made a sample, and dynamic viscoelasticity thereof was measured using an ARES type rotary rheometer manufactured by Rheometrics as a measurement device of dynamic viscoelasticity characteristics under nitrogen atmosphere and the following conditions.

- Plate: ϕ25 mm (diameter) parallel plate
- Temperature: 160°C
- Strain amount: 10%
- Measurement angular frequency range: $1.0 \times 10^{-2}$ to $1.0 \times 10^{2}$ rad/s
- Measurement interval: 5 points/decade

A phase angle δ was plotted to the common logarithm log G* of the absolute value G* (Pa) of a complex modulus of elasticity, and the value of δ (degree) at the point corresponding to log G*=5.0 was made δ (G*=0.1 MPa). When there was no point corresponding to log G*=5.0 in the measurement points, the δ value at log G*=5.0 was obtained by linear

interpolation using two points around log G*=5.0. Also, when all the measurement points were log G*<5, the δ value at log G*=5.0 was obtained by extrapolating the δ value at log G*=5.0 using the three points from the largest log G* value with the quadratic curve.

(2) Measurement of weight average molecular weight (Mw) and molecular weight distribution parameter (Mw/Mn)

The weight average molecular weight (Mw) was obtained by gel permeation chromatography (GPC). Also, the molecular weight distribution parameter (Mw/Mn) was calculated by further obtaining a number average molecular weight (Mn) by gel permeation chromatography (GPC), and from the ratio of Mw and Mn, i.e., Mw/Mn. The measurement was carried out according to the following procedure and conditions.

1) Pretreatment of sample

When the sample contained a carboxylic acid group, for example, esterification treatment such as methyl esterification using diazomethane or trimethylsilyl (TMS) diazomethane, etc., was carried out and used for the measurement. Also, when the sample contained a carboxylic acid base, an acid treatment was carried out to modify the carboxylic acid base into a carboxylic acid group, the above-mentioned esterification treatment was carried out and used for the measurement.

2) Preparation of sample solution

In 4 mL vial bottle was weighed 3 mg of the sample and 3 mL of o-dichlorobenzene, and after a lid was put thereon with a screw cap and a septum made of Teflon (Registered Trademark), the mixture was shaken at 150°C for 2 hours using SSC-7300 type high-temperature shaking device manufactured by Senshu Scientific Co., Ltd.. After completion of the shaking, it was visually confirmed that there were no insoluble components.

3) Measurement

To Alliance GPCV2000 type manufactured by Waters Corp., were connected high temperature GPC column Showdex HT-G×1 manufactured by SHOWA DENKO K.K. and Ditto HT-806M×2, and the measurement was carried out using o-dichlorobenzene as an eluent at a temperature of 145°C and a flow rate: 1.0 mL/min.

4) Calibration curve

Calibration of the column is carried out by subjecting to measurements of monodispersed polystyrenes (each 0.07 mg/ml solution of S-7300, S-3900, S-1950, S-1460, S-1010, S-565, S-152, S-66.0, S-28.5 and S-5.05) manufactured by SHOWA DENKO K.K., n-eicosane and n-tetracontane under the same conditions as mentioned above, and logarithmic values of the elution time and the molecular weight are approximated by a quaternary equation. Incidentally, for conversion of the polystyrene molecular weight ($M_{PS}$) and the polyethylene molecular weight ($M_{PE}$), the following formula was used.

$$M_{PE}=0.468\times M_{PS}$$

(3) Melt flow rate (MFR)

The MFR was measured in accordance with Table 1-condition 7 of JIS K-7210 (1999), with the condition at a temperature of 190°C and a load of 21.18 N (=2.16 kg).

(4) Melting point and crystallinity

The melting point is shown by the peak temperature of the endothermic curve measured by a differential scanning calorimeter (DSC). For the measurement, DSC (DSC7020) manufactured by SII NanoTechnology Co., Ltd., was used, and the measurement was carried out by the following measurement conditions.

About 5.0 mg of the sample was packed in an aluminum pan, the temperature was raised to 200°C with 10°C/min, maintained at 200°C for 5 minutes and then lowered to 30°C with 10°C/min. After maintaining at 30°C for 5 minutes, in the absorption curve when the temperature was raised again with 10°C/min, the maximum peak temperature was made a melting point Tm, and a heat of fusion (ΔH) was obtained from a melt endothermic peak area, and the heat of fusion thereof was divided by the heat of fusion of 293 J/g of the perfect crystal of the high-density polyethylene (HDPE) to

obtain the crystallinity (%).

(5) Measurement method of amount of structural unit and number of branches per 1,000 carbons of monomer having carboxy group and/or dicarboxylic anhydride group, and optional monomer

The amount of the structural unit and a number of branches per 1,000 carbons of the monomer having a carboxy group and/or a dicarboxylic anhydride group, and the optional monomer in the copolymer of the present invention, can be obtained by using $^{13}$C-NMR spectrum. The $^{1}$H-NMR spectrum and $^{13}$C-NMR were measured according to the following method.

A sample of 200 to 300 mg was charged in an NMR sample tube having an inner diameter of 10 mmϕ with 2.4 ml of a mixed solvent of o-dichlorobenzene ($C_6H_4Cl_2$) and deuterated benzene bromide ($C_6D_5Br$) ($C_6H_4Cl_2/C_6D_5Br$=2/1 (volume ratio)) and hexamethyldisiloxane which is a standard substance of chemical shift and after replacing with nitrogen, the tube was sealed and dissolved by heating to prepare a uniform solution which was made a sample for NMR measurement. The NMR measurement was carried out using an AV400M type NMR apparatus of Bruker Japan Co., Ltd., equipped with 10 mmϕ of a cryoprobe at 120°C.

The $^{13}$C-NMR was measured with the sample temperature of 120°C, the pulse angle of 90°, the pulse interval of 51.5 seconds, the number of integrations of 512 times or more, by the reverse gate decoupling method. The chemical shift was set the $^{13}$C signal of hexamethyldisiloxane to 1.98 ppm, and the chemical shift of the signals due to the other $^{13}$C was based on this.

1) Pretreatment of sample

When the carboxylic acid base was contained in the sample, it was used for the measurement after the carboxylic acid base was modified to a carboxy group by subjecting to acid treatment. Also, when a carboxy group was contained in the sample, for example, esterification treatment such as methyl esterification, etc., using diazomethane or trimethylsilyl (TMS) diazomethane, etc., may be optionally carried out.

2) Calculation of amount of structural unit of monomer having carboxy group and/or dicarboxylic anhydride group, and optional monomer

<E/tBA>

The quaternary carbon signal of the t-butyl acrylate group of tBA is detected at 79.6 to 78.8 of $^{13}$C-NMR spectrum. Using these signal intensities, an amount of the comonomer was calculated from the following equation.

$$\text{Total tBA amount (mol\%)} = I\ (tBA) \times 100/[I\ (tBA) + I\ (E)]$$

Here, I (tBA) and I (E) are each amount represented by the following equations.

$$I\ (tBA) = I_{79.6\ to\ 78.8}$$

$$I\ (E) = (I_{180.0\ to\ 135.0} + I_{120.0\ to\ 5.0} - I\ (tBA) \times 7)/2$$

<E/tBA/nBA>

The quaternary carbon signal of the t-butyl acrylate group of tBA is detected at 79.6 to 78.8 ppm of $^{13}$C-NMR spectrum, and the methylene signal of the butoxy group of nBA is detected at 64.1 to 63.4 ppm. Using these signal intensities, an amount of the comonomer was calculated from the following equation.

$$\text{Total tBA amount (mol\%)} = I\ (tBA) \times 100/[I\ (tBA) + I\ (nBA) + I\ (E)]$$

$$\text{Total nBA amount (mol\%)} = I\ (nBA) \times 100/[I\ (tBA) + I\ (nBA) + I\ (E)]$$

Here, I (tBA), I (nBA) and I (E) are each amount represented by the following equations.

$$I\ (tBA)=I_{79.6\ to\ 78.8}$$

$$I\ (nBA)=I_{64.1\ to\ 63.4}$$

$$I\ (E)=(I_{180.0\ to\ 135.0}+I_{120.0\ to\ 5.0}-I\ (nBA)\times 7-I\ (tBA)\times 7)/2$$

<E/tBA/iBA>

The quaternary carbon signal of the t-butyl acrylate group of tBA is detected at 79.6 to 78.8 ppm of $^{13}C$-NMR spectrum, the methylene signal of the isobutoxy group of iBA is detected at 70.5 to 69.8 ppm and the methyl signal of the isobutoxy group is detected at 19.5 to 18.9 ppm. Using these signal intensities, an amount of the comonomer was calculated from the following equation.

$$\text{Total tBA amount (mol\%)}=I\ (tBA)\times 100/[I\ (tBA)+I\ (iBA)+I\ (E)]$$

$$\text{Total iBA amount (mol\%)}=I\ (iBA)\times 100/[I\ (tBA)+I\ (iBA)+I\ (E)]$$

Here, I (tBA), I (iBA) and I (E) are each amount represented by the following equations.

$$I\ (tBA)=I_{79.6\ to\ 78.8}$$

$$I\ (iBA)=(I_{70.5\ to\ 69.8}+I_{19.5\ to\ 18.9})/3$$

$$I\ (E)=(I_{180.0\ to\ 135.0}+I_{120.0\ to\ 5.0}-I\ (iBA)\times 7-I\ (tBA)\times 7)/2$$

<E/tBA/NB>

The quaternary carbon signal of the t-butyl acrylate group of tBA is detected at 79.6 to 78.8 ppm of $^{13}C$-NMR spectrum, and the methine carbon signal of NB is detected at 41.9 to 41.1 ppm. Using these signal intensities, an amount of the comonomer was calculated from the following equation.

$$\text{Total tBA amount (mol\%)}=I\ (tBA)\times 100/[I\ (tBA)+I\ (NB)+I\ (E)]$$

$$\text{Total NB amount (mol\%)}=I\ (NB)\times 100/[I\ (tBA)+I\ (NB)+I\ (E)]$$

Here, I (tBA), I (NB) and I (E) are each amount represented by the following equations.

$$I\ (tBA)=I_{79.6\ to\ 78.8}$$

$$I\ (NB)=(I_{41.9\ to\ 41.1})/2$$

$$I\ (E)=(I_{180.0\ to\ 135.0}+I_{120.0\ to\ 5.0}-I\ (NB)\times 7-I\ (tBA)\times 7)/2$$

Incidentally, when the amount of the structural unit of each monomer is indicated by "<0.1" including the inequality sign, it means that it exists as a structural unit in the multinary copolymer, but it is an amount less than 0.1 mol% in consideration of significant figures.

3) Calculation of number of branches per 1,000 carbons

In the multinary copolymer, there exists an isolated type in which a branch is present alone in the main chain and a composite type (a counter type in which branch and branch face each other via the main chain, a branched-branch type in which branch exists in the branched chain, and a chained type).

The following an example of the structure of ethyl branch. Incidentally, in the example of the counter type, R represents an alkyl group.

[Formula 10]

Ethyl branch (isolated type)

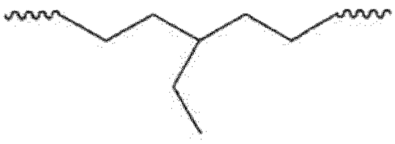

Ethyl branch (composite type)

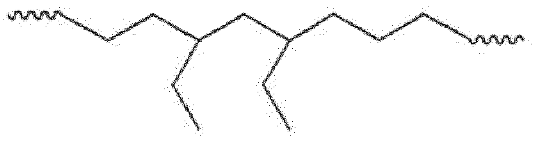

Counter type

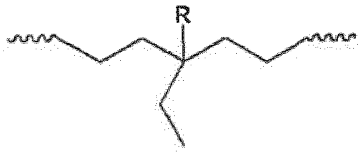

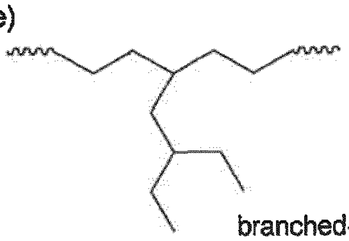

branched-branched type

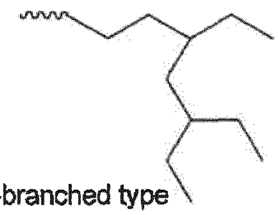

Chained type

The number of branches per 1,000 carbons is obtained by substituting any of the following I (B1), I (B2) and I (B4) in the term of I (branch) of the following formula. B1 represents a methyl branch, B2 represents an ethyl branch and B4 represents a butyl branch. The number of methyl branches is obtained by using I (B1), the number of ethyl branches is obtained by using I (B2), and the number of butyl branches is obtained by using I (B4).

$$\text{Number of branches (number/per 1,000 carbons)} = I\ (\text{branch}) \times 1000 / I\ (\text{total})$$

Here, I (total), I (B1), I (B2) and I (B4) are amounts shown by the following equations.

$$I\ (\text{total}) = I_{180.0\ \text{to}\ 135.0} + I_{120.0\ \text{to}\ 5.0}$$

$$I\ (B1) = (I_{20.0\ \text{to}\ 19.8} + I_{33.2\ \text{to}\ 33.1} + I_{37.5\ \text{to}\ 37.3})/4$$

$$I(B2) = I_{8.6\ to\ 7.6} + I_{11.8\ to\ 10.5}$$

$$I(B4) = I_{14.3\ to\ 13.7} - I_{32.2\ to\ 32.0}$$

Here, I indicates an integrated intensity, and the numerical value of subscript of I indicates a range of chemical shift. For example, $I_{180.0\ to\ 135.0}$ indicates an integrated intensity of $^{13}C$ signal detected between 180.0 ppm and 135.0 ppm.

Attribution was based on Non-Patent Document Macromolecules 1984, 17, 1756-1761, Macromolecules 1979, 12,41.

Incidentally, when the number of each branch is indicated by "<0.1" including the inequality sign, it means that it exists as a structural unit in the multinary copolymer, but it is an amount less than 0.1 mol% in consideration of significant figures. Also, not detected means less than the detection limit.

(6) Infrared absorption spectrum

A sample is melted at 180°C for 3 minutes, and subjected to compression molding to prepare a film having a thickness of about 50 μm. This film was analyzed by Fourier transform infrared spectroscopy to obtain infrared absorption spectrum.

Product name: FT/IR-6100 manufactured by JASCO Corporation
Measurement means: Transmission method
Detector: TGS (Triglycine sulfate)
Number of integrations: 16 to 512 times
Resolution: 4.0 $cm^{-1}$
Measurement wavelength: 5000 to 500 $cm^{-1}$

(7) Tensile impact strength

1) Preparation method of tensile impact strength test sample

A sample was charged in a mold for heat press with a thickness of 1 mm, preheated in a hot press machine at a surface temperature of 180°C for 5 minutes, the sample was melted and a residual gas in the sample was degassed by repeating pressurization and depressurization, and the sample was further pressurized at 4.9 MPa and maintained for 5 minutes. Thereafter, it was gradually cooled at a rate of 10°C/min in the state of applying a pressure of 4.9 MPa, and when the temperature lowered to around room temperature, then, the molded plate was taken out from the mold. The state of the obtained molded plate was adjusted under the environment of a temperature of 23±2°C, a humidity of 50±5°C for 48 hours or longer. From the press plate after state adjustment, a test piece in the shape of ASTM D1822 Type-S was punched out to make it a tensile impact strength test sample.

2) Tensile impact strength test conditions

Using the above-mentioned test piece, tensile impact strength was measured with reference to the B method of JIS K 7160-1996. Incidentally, the only difference from JIS K 7160-1996 is the shape of the test piece. With regard to other measurement conditions, etc.; the test was carried out in accordance with the method of JIS K 7160-1996.

(8) Haze

1) Press plate adjustment method of sample

A sample was charged in a mold for heat press with dimensions of 50 mm×60 mm and a thickness of 0.5 mm, preheated in a hot press machine at a surface temperature of 180°C for 5 minutes, a residual gas in the sample was degassed by repeating pressurization and depressurization, and the sample was further pressurized at 4.9 MPa and maintained for 3 minutes. Thereafter, it was transferred to a press machine having a surface temperature of 25°C, and cooled by holding at a pressure of 4.9 MPa for 3 minutes to prepare a press plate having a thickness of about 0.5 mm.

2) Haze measurement conditions

Using the above-mentioned test piece, haze was measured in accordance with JIS K 7136-2000.

(9) Environmental stress cracking resistance (ESCR)

1) Method for preparing ESCR test sample

A sample was charged in a mold for heat press with a thickness of 3 mm, preheated in a hot press machine at a surface temperature of 180°C for 5 minutes, a residual gas in the sample was degassed by repeating pressurization and depressurization, and the sample was further pressurized at 4.9 MPa and maintained for 5 minutes. Thereafter, it was gradually cooled at a rate of 10°C/min in the state of applying a pressure of 4.9 MPa, and when the temperature lowered to around room temperature, then, the molded plate was taken out from the mold. The state of the obtained molded plate was adjusted for 48 hours or longer in an environment of a temperature of 23±2°C and a humidity of 50±5°C. From the press plate after state adjustment, a test piece having a shape conforming to ASTM D1693 was prepared.

2) ESCR test conditions

Using the above-mentioned test piece, a 50% crack generation time ($F_{50}$) was measured at a test temperature of 50°C with reference to ASTM D1693.

<Synthesis of metal complex>

(1) Synthesis of B-27DM/Ni complex

As the B-27DM/Ni complex, in accordance with Synthetic Example 4 described in WO 2010/050256, the following 2-bis(2,6-dimethoxyphenyl)phosphano-6-pentafluorophenylphenol ligand (B-27DM) was used. In accordance with Example 1 of WO 2010/050256, a nickel complex (B-27DM/Ni) in which B-27DM and $Ni(COD)_2$ are reacted with 1:1 was synthesized using bis(1,5-cyclooctadiene)nickel(0) (which is referred to as $Ni(COD)_2$).

[Formula 11]

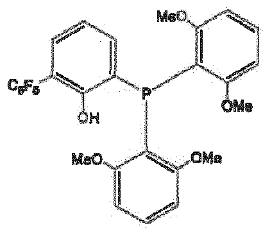

B-27DM

(2) Synthesis of B-423/Ni complex

1) Synthesis of ligand B-423: 2-bis(2,6-dimethoxyphenyl)phosphano-6-(2,6-diisopropylphenyl)phenol

[Formula 12]

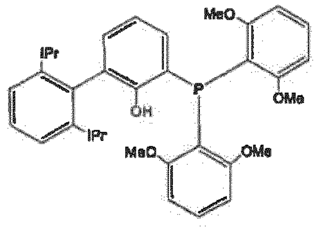

B-423

A ligand B-423 was synthesized according to the following scheme.

Incidentally, in the following chemical formulae, -OMOM represents a methoxymethoxy group ($-OCH_2OCH_3$).

[Formula 13]

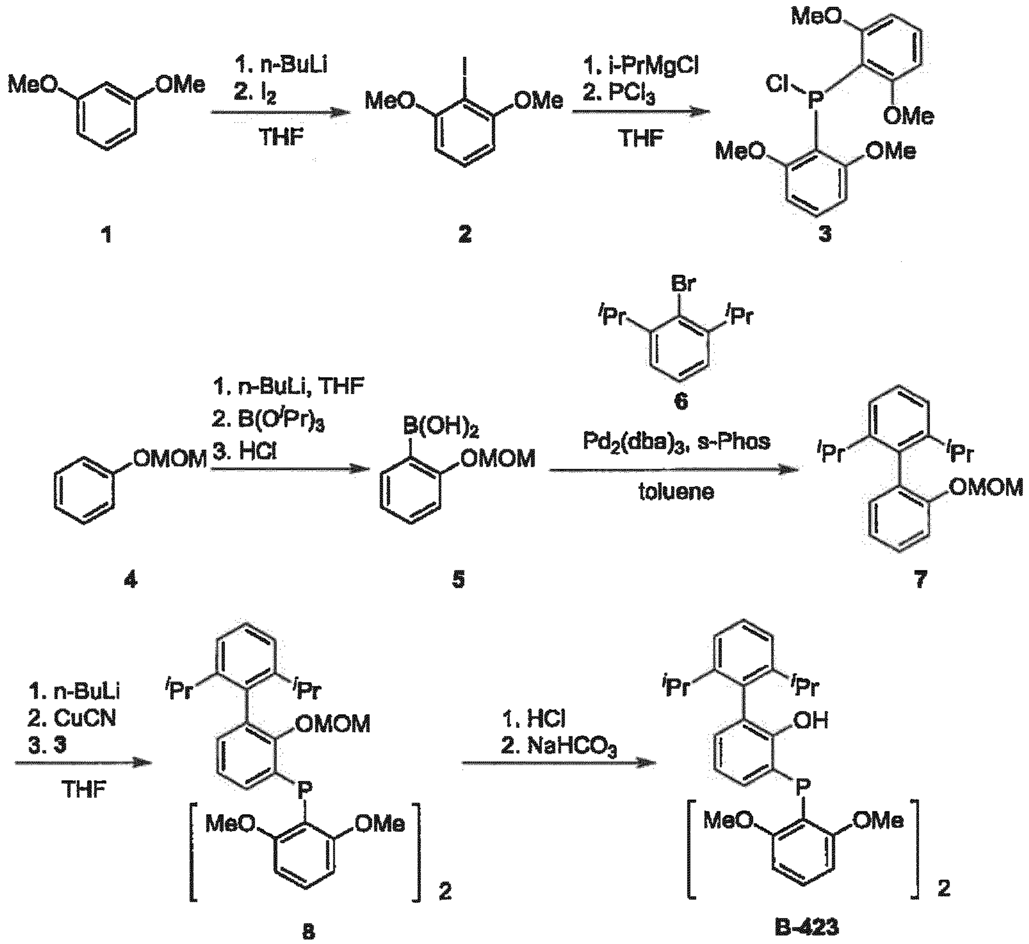


(i) Synthesis of Compound 2

It was synthesized in accordance with Patent Document WO2010/050256.

(ii) Synthesis of Compound 3

Iso-PrMgCl (2M, 5.25 ml) was added to a THF (5.0 ml) solution of Compound 2 (2.64 g, 10.0 mmol) at 0°C. After the reaction mixture was stirred at 25°C for 1 hour, $PCl_3$ (618 mg, 4.50 mmol) was added thereto at -78°C.

A temperature of the reaction mixture was elevated to 25°C over 3 hours to obtain a yellow suspension. The solvent was distilled off under reduced pressure to obtain a yellow solid. This mixture was used in the next reaction

without purification.

(iii) Synthesis of Compound 5

n-BuLi (2.5M, 96 ml) was added to a THF (250 ml) solution of Compound 4 (30 g, 220 mmol) at 0°C, and the mixture was stirred at 30°C for 1 hour. $B(O^iPr)_3$ (123 g, 651 mmol) was added to this solution at -78°C, and the mixture was stirred at 30°C for 2 hours to obtain a white suspension.

Hydrochloric acid (1M) was added thereto to adjust the pH to 6 to 7, and the organic layer was concentrated to obtain a mixture.

The obtained mixture was washed with petroleum ether (80 ml) to obtain 26 g of Compound 5.

(iv) Synthesis of Compound 7

Compound 5 (5.00 g, 27.5 mmol), Compound 6 (4.42 g, 18.3 mmol), $Pd_2(dba)_3$ (168 mg, 0.183 mmol), s-Phos(2-dicyclohexylphosphino-2',6'-dimethoxybiphenyl) (376 mg, 0.916 mmol) and $K_3PO_4$ (7.35 g, 34.6 mmol) were weighed into a reaction vessel, and toluene (40 ml) was added thereto. This solution was reacted at 110°C for 12 hours to obtain a black suspension. $H_2O$ (50 ml) was added thereto and the mixture was extracted with EtOAc (55 ml×3). The organic layer was washed with saline (20 ml) and dehydrated with $Na_2SO_4$. The organic layer was filtered and after the solvent was distilled off under reduced pressure, the residue was purified by silica gel column to obtain 1.3 g of an oily substance.

(v) Synthesis of Compound 8

n-BuLi (2.5M, 9.15 ml) was added dropwise to a THF (40 ml) solution of Compound 7 (6.5 g, 22 mmol) at 0°C, and the temperature of the mixture was raised to 30°C and stirred for 1 hour. This reaction solution was cooled to -78°C and CuCN (2.1 g, 23 mmol) was added thereto, and the mixture was stirred at 30°C for 1 hour.

The reaction solution was cooled to -78°C, a THF (40 ml) solution of Compound 3 (6.7 g, 20 mmol) was added thereto, and the mixture was stirred at 30°C for 12 hours to obtain a white suspension. When $H_2O$ (50 ml) was added to the suspension, a white precipitate was generated. The white precipitate was recovered by filtration, dissolved in dichloromethane (20 ml), aqueous ammonia (80 ml) was added thereto and stirred for 3 hours. The product was extracted with dichloromethane (50 ml×3) and dehydrated with $Na_2SO_4$, and then, concentrated to obtain a yellow oily substance. This oily substance was purified by silica gel column to obtain 2.9 g of Compound 8.

(vi) Synthesis of B-423

HCl/EtOAc (4M, 50 ml) was added to a dichloromethane (20 ml) solution of Compound 8 (2.9 g, 4.8 mmol) at 0°C, and the mixture was stirred at 30°C for 2 hours to obtain a pale yellowish solution.

The solvent was distilled off under reduced pressure, and then, dichloromethane (50 ml) was added thereto. The mixture was washed with a saturated $NaHCO_3$ aqueous solution (100 ml) to obtain 2.5 g of B-423. The NMR attribution values of the obtained ligand B-423 are shown below.

[NMR] $^1H$ NMR($CDCl_3$, $\delta$, ppm): 7.49(t, 1H), 7.33(t, 1H), 7.22(m, 4H), 6.93(d, 1H), 6.81(t, 1H), 6.49(dd, 4H), 6.46(br, 1H), 3.56(s, 12H), 2.63(sept, 2H), 1.05(d, 6H), 1.04(d, 6H);
$^{31}P$ NMR($CDCl_3$, $\delta$, ppm): -61.6(s).

2) Synthesis of B-423/Ni complex

Regarding B-423/Ni complex, by using B-423 ligand and bisacetylacetonato nickel(II) (which is referred to as $Ni(acac)_2$), a nickel complex (B-423/Ni) in which B-423 and $Ni(acac)_2$ reacted with 1:1 was synthesized in accordance with Example 1 of WO 2010/050256.

<(Production Example 1 to Production Example 5): Production of ionomer base resin precursor>

Using a transition metal complex (B-27DM/Ni complex or B-423/Ni complex), ethylene/tBu acrylate copolymer, and ethylene/tBu acrylate/norbornene copolymer were produced. With reference to Production Example 1 or Production Example 3 described in JP 2016-79408A, production of the copolymer was carried out, and optionally changed production conditions and results of production such as a kind of a metal catalyst, an amount of the metal catalyst, an amount of trioctyl aluminum (TNOA), an amount of toluene, a type of comonomer, an amount of comonomer, a partial pressure of ethylene, a polymerization temperature, a polymerization time, etc., are shown in Table 1, and the physical properties

of the obtained copolymers are shown in Table 2.

[Table 1]

Table 1

| | Kind of metal complex | Amount of metal complex | TNO A | Toluene | Comono mer 1 | Comonomer 2 | Comanomer 1 | Comonomer 2 | Polymerization conditions | | | Yield | Catalyst efficiency |
|---|---|---|---|---|---|---|---|---|---|---|---|---|---|
| | | | | | | | Concentration | Concentration | Ethylene partial pressure | Temperature | Time | | |
| | | mmol | mmol | L | | | mmol/L | mmol/L | MPa | °C | min | A | q/mol |
| Production example 1 | B-27DM/Ni | 320 | 140 | 1000 | t-Butyl acrylate | - | 138 | - | **0.8** | 100 | 240 | 41000 | 1.3E+05 |
| Production example 2 | B-423/Ni | 550 | 136 | 1000 | t-Butyl acrylate | - | 135 | - | 0.8 | 102 | 200 | 93000 | 1.7E+05 |
| Production example 3 | B-27DM/Ni | 1000 | 225 | 1000 | t-Butyl acrylate | 2-Norbornene | 230 | 210 | 0.8 | 85 | 330 | 117000 | 1.2E+05 |
| Production example 4 | B-423/Ni | 1460 | 3573 | 1000 | t-Butyl acrylate | i-Butyl acrylate | 147.2 | 66.4 | 0.8 | 95 | 510 | 75000 | 5.1E+04 |
| Production example 5 | B-423/Ni | 550 | 280 | 1000 | t-Butyl acrylate | - | 147 | - | 0.8 | 105 | 240 | 107000 | 1.9E+05 |

[Table 2]

Table 2 E/tBA/X copolymerization results

| | Comonomer 1 | Comonomer 2 | Comonomer 1 | Comonomer 2 | Melting point | Crystallinity | Weight average molecular weight | Molecular weight distribution | Methyl branch amount | Ethyl branch amount | Butyl branch amount |
|---|---|---|---|---|---|---|---|---|---|---|---|
| | | | Content | Content | Tm | | | | | | |
| | | | mol% | mol% | °C | % | $Mw*10^{-4}$ | Mw/Mn | Number/-1,000C | Number/-1,000C | Number/-1,000C |
| Production example 1 | t-Butyl acrylate | - | 5.6 | - | 94.1 | 27 | 2.2 | 2.3 | 1.0 | not detected | not detected |
| Production example 2 | t-Butyl acrylate | - | 3.5 | - | 103.6 | 33 | 4.4 | 2.0 | 1.1 | not detected | not detected |
| Production example 3 | t-Butyl acrylate | 2-Norbornene | 5.1 | 2.9 | 80.5 | 14.6 | 3.8 | 2.3 | 0.5 | not detected | not detected |
| Production example 4 | t-Butyl acrylate | i-Butyl acrylate | 5.4 | 2.3 . | 80.5 | 11.6 | 2.7 | 2.3 | not detected | not detected | not detected |
| Production example 5 | t-Butyl acrylate | - | 3.6 | - | 102.6 | 33.2 | 3.4 | 2.5 | 1.6 | not detected | not detected |

<(Resin 1 to Resin 5): Production of ionomer base resin-1>

In a separable flask having a volume of 500 ml were charged 40 g of the obtained copolymer of Production Example 1 to Production Example 5, 0.8 g of para-toluenesulfonic acid monohydrate and 185 ml of toluene, and the mixture was stirred at 105°C for 4 hours. After adding 185 ml of ion-exchanged water thereto, stirring the same and allowing to stand, the aqueous layer was taken out. After that, addition and taken out of the ion-exchanged water were repeatedly carried out until the pH of the taken out aqueous layer became 5 or more. The solvent was distilled off under reduced pressure from the remained solution, and the residue was dried until it became the constant weight.

In the IR spectrum of the obtained resin, disappearance of the peak near 850 $cm^{-1}$ derived from the tBu group and decrease of the peak near 1730 $cm^{-1}$ derived from an ester of a carbonyl group, and increase of the peak near 1700 $cm^{-1}$derived from a carbonyl group of the carboxylic acid (dimer) were observed.

According to this, decomposition of the t-Bu ester and formation of the carboxylic acid were confirmed to obtain ionomer base Resin 1 to Resin 5. The physical properties of the obtained resin were shown in Table 3. In the following Table, "E", "AA" and "NB" are each abbreviations of "ethylene", "acrylic acid" and "norbornene" as the structural units, respectively.

[Table 3]

Table 3 E/(M)AA/X base resin results

| Base resin | Resin composition | MFR | Melting point | Crystal linity | Structural unit amount [Z] | -3.74× [Z] +130 | Phase anele | Methyl branch amount | Ethyl branch amount | Butyl branch amount |
|---|---|---|---|---|---|---|---|---|---|---|
| | A/B/C | 190deg, 2.16kg | Tm | | [B]+[C] | | δ (G*=0.1 MPa) | | | |
| | mol/mol/mol | g/10min | °C | % | mol% | | ° | Number/-1,000C | Number/-1,000C | Number/-1,000C |
| Resin 1 | E/AA=94.4/5.6 | 128 | 100 | 33 | 5.6 | 109 | 51 | 1.0 | not detected | 1,000C not detected |
| Resin 2 | E/AA=96.5/3.5 | 13 | 108 | 38 | 3.6 | 117 | 64 | 1.1 | not detected | not detected |
| Resin 3 | E/AA/NB=92.0/5.1/2.9 | 17 | 84 | 20 | 8.0 | 100 | 62 | 0.5 | not detected | not detected |
| Resin 4 | E/AA/iBA= 92.3/5.4/2.3 | 81 | 88 | 19 | 7.7 | 101 | 64 | not detected | not detected | not detected |
| Resin 5 | E/AA=96.4/3.6 | 20 | 107 | 39 | 3.6 | 117 | 61 | 1.6 | not detected | not detected |

<Ionomer 1 to Ionomer 14: Production of ionomer-1>

1) Preparation of Na ion supply source

To a Laboplast Mill: roller mixer Type R60 manufactured by TOYO SEIKI CO., LTD., equipped with a small size mixer having a volume of 60 ml were charged 22 g of an ethylene/methacrylic acid (MAA) copolymer (available from Dow-Mitsui Chemicals Co., Ltd., brand: Nucrel N1050H) and 18 g of sodium carbonate, and the mixture was kneaded at 180°C and 40 rpm for 3 minutes to prepare a Na ion supply source.

2) Preparation of Zn ion supply source

To a Laboplast Mill: roller mixer Type R60 manufactured by TOYO SEIKI CO., LTD., equipped with a small size mixer having a volume of 60 ml were charged 21.8 g of an ethylene/methacrylic acid (MAA) copolymer (available from Dow-Mitsui Chemicals Co., Ltd., brand: Nucrel N1050H), 18 g of zinc oxide and 0.2 g of zinc stearate, and the mixture was kneaded at 180°C and 40 rpm for 3 minutes to prepare a Zn ion supply source.

3) Preparation of ionomer

To a Laboplast Mill: roller mixer Type R60 manufactured by TOYO SEIKI CO., LTD., equipped with a small size mixer having a volume of 60 ml was charged 40 g of Resin 1 to Resin 5, and the mixture was kneaded at 160°C and 40 rpm for 3 minutes to dissolve the same. Thereafter, the Na ion supply source or Zn ion supply source was charged therein so that the mixture became a desired degree of neutralization, and the mixture was kneaded at 250°C and 40 rpm for 5 minutes.

In the IR spectrum of the obtained resin, the peak near 1700 $cm^{-1}$ derived from a carbonyl group of the carboxylic acid (dimer) decreased and the peak near 1560 $cm^{-1}$ derived from a carbonyl group of the carboxylic acid base increased. It was confirmed that an ionomer having a desired degree of neutralization could be prepared from the decreased amount of the peak near 1700 $cm^{-1}$ derived from a carbonyl group of the carboxylic acid (dimer). Physical properties of the obtained ionomer are shown in Table 4.

[Table 4]

| | Base resin | Resin composition | Degree of neutralization | | MFR | Phase angle | Melting point | Tensile impact strength | Right side of formula ($\alpha$) | Haze | ESCR |
|---|---|---|---|---|---|---|---|---|---|---|---|
| | | A/B/C | $Na^+$/(M)AA | $2\times Zn^{2+}$/(M)AA | 190deg, 2.16kg | $\delta$ ($G^*$=0.1 MPa) | Tm | T | | H | $F_{50}$ |
| | | mol/mol/mol | mol | mol | g/10min | ° | °C | kJ/m$^2$ | | % | h |
| Example 1 | Resin 1 | E/AA=94.4/5.6 | 30 | - | 15 | 62 | 101.0 | 153 | 100.4 | 46 | no data |
| Example 2 | Resin 1 | E/AA-94.4/5.6 | 54 | - | 3.6 | 54 | 98.0 | 459 | 95.0 | no data | no data |
| Example 3 | Resin 1 | E/AA=94.4/5.6 | 60 | - | 1.8 | 54 | 96.6 | 772 | 89.4 | no data | no data |
| Example 4 | Resin 1 | E/AA=94.4/5.6 | 80 | - | 0.6 | 58 | 94.9 | 928 | 86.7 | no data | no data |
| Example 5 | Resin 2 | E/AA=96.5/3.5 | 23 | - | 1.5 | 59 | 107.4 | 970 | 85.9 | 24 | no data |
| Example 6 | Resin 2 | E/AA=96.5/3.5 | 35 | - | 0.6 | 60 | 106.3 | 1267 | 80.7 | 19 | no data |
| Example 7 | Resin 3 | E/AA/NB=92.0/5.1/2.9 | 20 | - | 2.8 | 63 | 86.0 | 1160 | 82.6 | 14 | no data |
| Example 8 | Resin 3 | E/AA/NB=92.0/5.1/2.9 | 30 | - | 1.3 | 61 | 84.6 | 1301 | 80.1 | 14 | >1500 |
| Example 9 | Resin 3 | E/AA/NB=92.0/5.1/2.9 | 45 | - | 0.5 | 61 | 81.7 | 1282 | 80.4 | 14 | no data |
| Example 10 | Resin 4 | E/AA/iBA=92.3/5.4/2.3 | 45 | - | 2.2 | 55 | 87.1 | 1043 | 84.6 | 14 | no data |
| Example 11 | Resin 4 | E/AA/iBA=92.3/5.4/2.3 | - | 35 | 1.9 | 55 | 86.7 | 943 | 86.4 | 14 | no data |
| Example 12 | Resin 2 | E/AA=96.5/3.5 | 20 | - | 2.9 | 59 | 107.0 | 970 | 85.9 | 25 | no data |

(continued)

| | Base resin | Resin composition | Degree of neutralization | | MFR | Phase angle | Melting point | Tensile impact strength | Right side of formula (α) | Haze | ESCR |
|---|---|---|---|---|---|---|---|---|---|---|---|
| | | A/B/C | $Na^+$/(M)AA | 2×$Zn^{2+}$/(M)AA | 190deg, 2.16kg | δ (G*=0.1 MPa) | Tm | T | | H | $F_{50}$ |
| | | mol/mol/mol | mol | mol | g/10min | ° | °C | kJ/$m^2$ | | % | h |
| Example 13 | Resin 5 | E/AA=96.4/3.6 | 13 | - | 8.3 | 60 | 106.9 | 349 | 96.9 | 32 | no data |
| Example 14 | Resin 5 | E/AA=96.4/3.6 | - | 10 | 4.8 | 57 | 107.2 | 246 | 98.7 | 29 | no data |

(Comparative Example 1): E/MAA base binary ionomer

An ionomer resin (available from Dow-Mitsui Chemicals Co., Ltd., brand: HIMILAN HIM1605) which is a copolymer of ethylene, methacrylic acid and Na methacrylate and produced by a high-pressure radical method process was used as a reference ionomer. Physical properties are shown in Table 5.

(Comparative Example 2): E/MAA base binary ionomer

An ionomer resin (available from Dow-Mitsui Chemicals Co., Ltd., brand: HIMILAN HIM1707) which is a copolymer of ethylene, methacrylic acid and Na methacrylate and produced by a high-pressure radical method process was used as a reference ionomer. Physical properties are shown in Table 5.

(Comparative Example 3): E/MAA base binary ionomer

An ionomer resin (available from Dow-Mitsui Chemicals Co., Ltd., brand: HIMILAN HIM1555) which is a copolymer of ethylene, methacrylic acid and Na methacrylate and produced by a high-pressure radical method process was used as a reference ionomer. Physical properties are shown in Table 5.

[Table 5]

| | Base resin | Resin composition | Degree neutral of ization | | MFR | Phase angle | Melting point | Tensile impact strength | I Right side of formula (α) | Haze | i ESCR |
|---|---|---|---|---|---|---|---|---|---|---|---|
| | | A/B | $Na^+$/ (M) AA | 2×$Zn^{2+}$/ (M) AA | 190deg, 2.16kg | δ ($G^*$=0.1 MPa) | Tm | E | | H | $F_{50}$ |
| | | mol/mol | mol% | mol% | g/10min | ° | °C | kJ/$m^2$ | | | |
| Compar ative Example 1 | - | E/MAA/ =94.6/5.4 | 30 | - | 2.8 | 46 | 90.6 | 623 | 92.1 | 18 | 8 |
| Compar ative Example 2 | - | E/MAA/ =94.6/5.4 | 54 | - | 0.9 | 47 | 86.3 | 707 | 90.6 | 19 | no data |
| Compar ative Example 3 | - | E/MAA/ =96.1/3.9 | 38 | - | 10.0 | 49 | 95.4 | 428 | 95.5 | 20 | no data |

<Consideration of results of Examples and Comparative Examples>

Example 1 to Example 14 and Comparative Example 1 to Comparative Example 3 each have the MFR of 0.5 g/10 min or more, and thus, were materials that can be suitably used for injection molding and compression molding. Fig. 3 is a drawing showing the relation between the melting point Tm (°C) and the tensile impact strength T ($kJ/m^2$) of Examples and Comparative Examples. When the plot points are located above the solid line indicating the right side of the formula (a): $Tm>-0.0177\times T+103.1$, the plot points satisfy the formula (a).

In Example 1 to Example 14, the relationship between the melting point and the tensile impact strength satisfies the formula (a), whereas in Comparative Example 1 to Comparative Example 3, they do not satisfy the formula (a), so that Example 1 to Example 14 gave the results superior in the balance between the impact strength and the heat resistance to those of Comparative Example 1 to Comparative Example 3.

Also, Example 1 to Example 6 and Example 12 to Example 14 exceeded the value of the melting point of 94°C, and they gave the result of particularly excellent in heat resistance among those excellent in balance between the impact strength and the heat resistance.

Also, in Examples 7 to 11, the value of the haze was less than 15%, and they gave the result that transparency was also excellent in addition to be excellent in balance between the impact strength and the heat resistance.

Also, when the ESCR of Example 8 and the ESCR of Comparative Examples 1 and 3 are compared to each other as a sample having a close degree of neutralization, in Example 8, the time was 1,500 hours or longer, whereas in Comparative Examples 1 and 3, the time was 8.3 hours and 0.5 hour, respectively, which were extremely short time. The ESCR was an extraordinarily large value in Example 8, and it gave the result that long-term durability was also excellent.

UTILIZABILITY IN INDUSTRY

The resin composition for injection molding or compression molding using the ionomer of the present invention is excellent in a balance between strength and heat resistance, long-term durability, etc., of the molded product as compared with the resin composition using the conventional ethylene-based ionomer. Therefore, by using the resin composition of the present invention, it is possible to produce injection molded products and compression molded products having strength, heat resistance, long-term durability, etc., in combination at a level that could not be achieved by conventional ethylene-based ionomers, so that they are industrially extremely useful. For example, it can be used for producing articles such as medical, food and beverages, office equipment, durable products for the consumer market, etc., in particular, containers, lids, etc., but is not limited to these and can be used for various kinds of product applications.

## Claims

1. A resin composition for injection molding or compression molding **characterized in that** the composition comprises the following ionomer:
an ionomer **characterized in that** at least a part of a carboxyl group and/or a dicarboxylic anhydride group in a copolymer (P) containing a structural unit (A) derived from ethylene and/or an $\alpha$-olefin having 3 to 20 carbon atoms and a structural unit (B) derived from a monomer having a carboxyl group and/or a dicarboxylic anhydride group as essential constitutional units being converted into a metal-containing carboxylic acid salt containing at least one kind of a metal ion(s) selected from Group 1, Group 2 or Group 12 of the periodic table, and a phase angle $\delta$ of the ionomer at an absolute value $G^*=0.1$ MPa of a complex modulus of elasticity measured by a rotary rheometer is a range of 50 degrees to 75 degrees.

2. The resin composition for injection molding or compression molding according to Claim 1 **characterized in that** MFR of the resin composition measured under conditions of a temperature of 190°C and a load of 21.18N in accordance with JIS K-7210 (1999) is 0.5 g/10 min or more.

3. The resin composition for injection molding or compression molding according to Claim 1 or 2, **characterized in that** a number of methyl branches calculated by $^{13}C$-NMR of the copolymer (P) is 50 or less per 1,000 carbons.

4. The resin composition for injection molding or compression molding according to Claim 1 or 2, **characterized in that** a number of methyl branches calculated by $^{13}C$-NMR of the copolymer (P) is 5 or less per 1,000 carbons.

5. The resin composition for injection molding or compression molding according to any one of Claims 1 to 4 **characterized in that** the copolymer (P) contains 2 to 20 mol% of the structural unit (B) in the copolymer.

6. The resin composition for injection molding or compression molding according to any one of Claims 1 to 5 **characterized in that** the structural unit (A) is a structural unit derived from ethylene.

7. The resin composition for injection molding or compression molding according to any one of Claims 1 to 6 **characterized in that** the copolymer (P) is produced by using a transition metal catalyst containing a transition metal of Groups 8 to 11 of the periodic table.

8. The resin composition for injection molding or compression molding according to Claim 7, **characterized in that** the transition metal catalyst is a transition metal catalyst comprising phosphorus sulfonic acid or phosphorus phenol ligand and nickel or palladium.

9. A resin composition for injection molding or compression molding **characterized in that** the composition comprises the following ionomer:
an ionomer **characterized in that** the ionomer comprises a copolymer (P) containing a structural unit (A) derived from ethylene and/or an α-olefin having 3 to 20 carbon atoms, a structural unit (B) derived from a monomer having a carboxyl group and/or a dicarboxylic anhydride group, and other than the structural unit (A) and the structural unit (B), a structural unit (C) which is a compound having one or more carbon-carbon double bond in a molecular structure as essential constitutional units, and at least a part of a carboxyl group and/or a dicarboxylic anhydride group being converted into a metal-containing carboxylic acid salt containing at least one kind of a metal ion(s) selected from Group 1, Group 2 or Group 12 of the periodic table, and a phase angle δ of the ionomer at an absolute value G*=0.1 MPa of a complex modulus of elasticity measured by a rotary rheometer is a range of 50 degrees to 75 degrees.

10. The resin composition for injection molding or compression molding according to Claim 9 **characterized in that** the structural unit (C) in the copolymer (P) is a non-cyclic monomer represented by the following general formula (1) or a cyclic monomer represented by the following general formula (2):

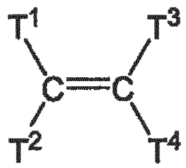

・・・(1)

in the general formula (1), $T^1$ to $T^3$ each independently represents a substituent selected from the group consisting of a hydrogen atom, a hydrocarbon group having 1 to 20 carbon atoms, a hydrocarbon group having 1 to 20 carbon atoms substituted by a hydroxyl group, a hydrocarbon group having 2 to 20 carbon atoms substituted by an alkoxy group having 1 to 20 carbon atoms, a hydrocarbon group having 3 to 20 carbon atoms substituted by an ester group having 2 to 20 carbon atoms, a hydrocarbon group having 1 to 20 carbon atoms substituted by a halogen atom, an alkoxy group having 1 to 20 carbon atoms, an aryl group having 6 to 20 carbon atoms, an ester group having 2 to 20 carbon atoms, a silyl group having 3 to 20 carbon atoms, a halogen atom or a cyano group, and
$T^4$ represents a substituent selected from the group consisting of a hydrocarbon group having 1 to 20 carbon atoms substituted by a hydroxyl group, a hydrocarbon group having 2 to 20 carbon atoms substituted by an alkoxy group having 1 to 20 carbon atoms, a hydrocarbon group having 3 to 20 carbon atoms substituted by an ester group having 2 to 20 carbon atoms, a hydrocarbon group having 1 to 20 carbon atoms substituted by a halogen atom, an alkoxy group having 1 to 20 carbon atoms, an aryl group having 6 to 20 carbon atoms, an ester group having 2 to 20 carbon atoms, a silyl group having 3 to 20 carbon atoms, a halogen atom or a cyano group,

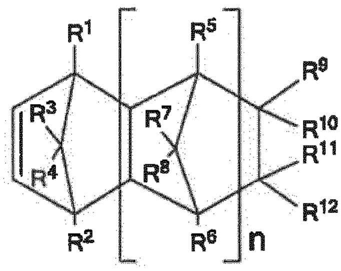

・・・(2)

in the general formula (2), $R^1$ to $R^{12}$ each may be the same or different from each other, and each is selected from

the group consisting of a hydrogen atom, a halogen atom and a hydrocarbon group having 1 to 20 carbon atoms, $R^9$ and $R^{10}$, and, $R^{11}$ and $R^{12}$ may be each integrated to form a divalent organic group, and $R^9$ or $R^{10}$, and $R^{11}$ or $R^{12}$ may form a ring with each other, and

n indicates 0 or a positive integer, and when n is 2 or more, $R^5$ to $R^8$ may be the same or different from each other in each repeating unit.

**11.** The resin composition for injection molding or compression molding according to Claim 10 **characterized in that** the structural unit (C) in the copolymer (P) is a non-cyclic monomer represented by the general formula (1).

**12.** The resin composition for injection molding or compression molding according to Claim 10 **characterized in that** the structural unit (C) in the copolymer (P) is a cyclic monomer represented by the general formula (2).

**13.** The resin composition for injection molding or compression molding according to any one of Claims 1 to 12 **characterized in that** a relation of a melting point Tm (°C) and a tensile impact strength T ($kJ/m^2$) of the ionomer satisfies the following formula (a):

$$Tm > -0.0177 \times T + 103.1 \cdots\cdots \text{formula } (\alpha).$$

**14.** The resin composition for injection molding or compression molding according to any one of Claims 1 to 13 **characterized in that** the melting point Tm (°C) of the ionomer is 90°C or higher.

**15.** The resin composition for injection molding or compression molding according to any one of Claims 1 to 14 **characterized in that** a haze H (%) measured in accordance with JIS K 7136-2000 is less than 19%.

Fig. 1

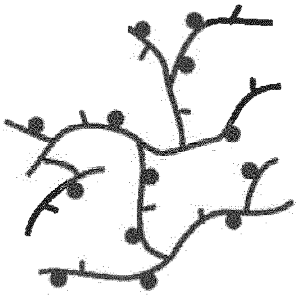

Fig. 2

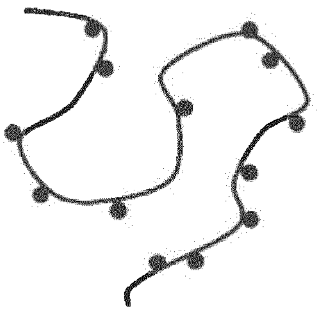

Fig. 3

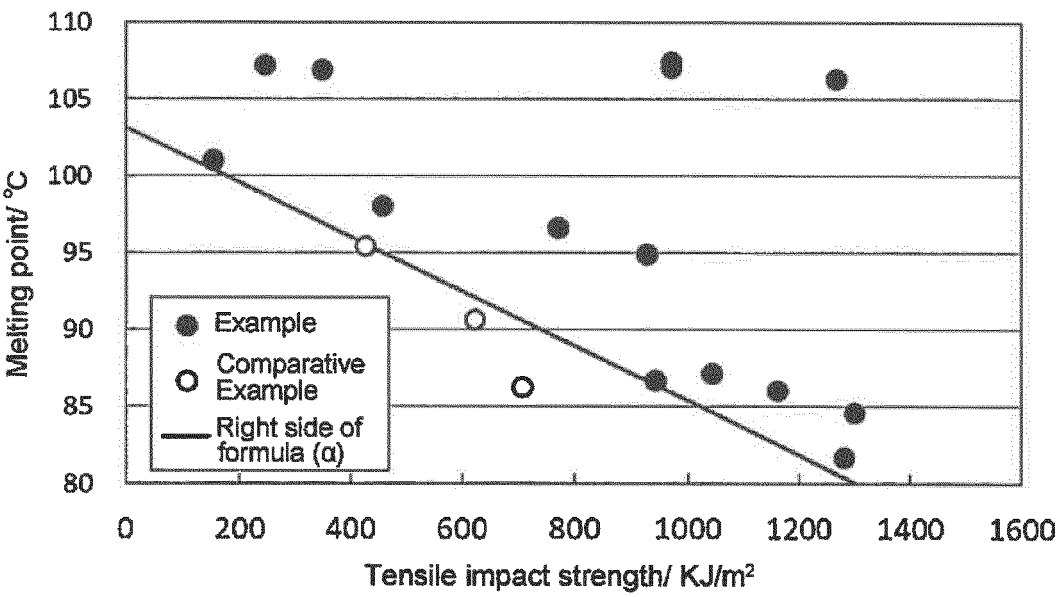

## INTERNATIONAL SEARCH REPORT

International application No. PCT/JP2020/024883

**A. CLASSIFICATION OF SUBJECT MATTER**

C08F 8/42(2006.01)i; C08F 4/70(2006.01)i; C08F 210/02(2006.01)i; C08L 23/26(2006.01)i
FI: C08F8/42: C08L23/26: C08F4/70: C08F210/02

According to International Patent Classification (IPC) or to both national classification and IPC

**B. FIELDS SEARCHED**

Minimum documentation searched (classification system followed by classification symbols)
C08F4; C08F6-246; C08L

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 63-270709 A (IDEMITSU KOSAN CO., LTD.) 08.11.1988 (1988-11-08) claims, page 4, upper left column, page 9, lower left column, example 3 | 1-6,13-15<br>1-6,9-12,14-15 |
| X<br>Y | JP 2016-79408 A (JAPAN POLYETHYLENE CORP.) 16.05.2016 (2016-05-16) claims, paragraphs [0021]-[0023], production examples 1, 3-5 | 1-15<br>1-15 |
| Y | JP 2006-83361 A (JSR CORPORATION) 30.03.2006 (2006-03-30) claims, paragraph [0126] | 1-15 |
| Y | JP 2017-519083 A (E. I. DU PONT DE NEMOURS AND COMPANY) 13.07.2017 (2017-07-13) claims, paragraph [0050] | 1-15 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 September 2020 (07.09.2020) | 15 September 2020 (15.09.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2020/024883

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2019/044784 A1 (DU PONT-MITSUI POLYCHEMICALS CO., LTD.) 07.03.2019 (2019-03-07) claims, paragraph [0052] | 1-15 |
| Y | JP 2011-507278 A (E. I. DU PONT DE NEMOURS AND COMPANY) 03.03.2011 (2011-03-03) claims | 9-11 |
| Y | JP 2015-195394 A (E. I. DU PONT DE NEMOURS AND COMPAN) 05.11.2015 (2015-11-05) claims, paragraph [0041] | 9-11 |

Form PCT/ISA/210 (continuation of second sheet) (January 2015)

**INTERNATIONAL SEARCH REPORT**
Information on patent family members

International application No.
PCT/JP2020/024883

| Patent Documents referred in the Report | Publication Date | Patent Family | Publication Date |
|---|---|---|---|
| JP 63-270709 A | 08 Nov. 1988 | US 4956418 A<br>claims, columns 3, 5, examples<br>EP 293595 A2<br>KR 10-1988-0012659 A | |
| JP 2016-79408 A | 16 May 2016 | US 2017/0306134 A1<br>claims, paragraphs [0064]-[0070], production examples 1, 3-5<br>WO 2016/060218 A1<br>EP 3208285 A1<br>CN 107075005 A | |
| JP 2006-83361 A | 30 Mar. 2006 | US 2007/0225449 A1<br>claims, paragraph [0194]<br>WO 2005/040236 A1<br>EP 1679323 A1<br>KR 10-2006-0103320 A<br>CN 1898272 A | |
| JP 2017-519083 A | 13 Jul. 2017 | US 2015/0376310 A1<br>claims, paragraph [0050]<br>WO 2015/199750 A1<br>KR 10-2018-0086541 A | |
| WO 2019/044784 A1 | 07 Mar. 2019 | (Family: none) | |
| JP 2011-507278 A | 03 Mar. 2011 | US 2009/0151772 A1<br>claims<br>WO 2009/079322 A2<br>EP 2217441 A1<br>CN 101952975 A | |
| JP 2015-195394 A | 05 Nov. 2015 | US 2010/0108126 A1<br>claims, paragraph [0046]<br>WO 2010/051522 A1<br>EP 2342209 A1<br>CN 102333786 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3264272 A
- JP 2016079408 A
- JP 2015163691 A
- JP 2010150532 A
- WO 2010050256 A
- JP 2010202647 A
- JP 2010260913 A


### Non-patent literature cited in the description


- **BROOKHART et al.** *Chem. Rev.,* 2000, vol. 100, 1169
- *Macromolecules,* 1984, vol. 17, 1756-1761
- *Macromolecules,* 1979, vol. 12, 41